(19) Europäisches Patentamt
European Patent Office
Office européen des brevets

(11) EP 2 473 569 B1

(12) EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **10754272.2**

(22) Anmeldetag: **30.08.2010**

(51) Int Cl.:
***C09D 4/00*** *(2006.01)* ***C09D 167/07*** *(2006.01)*
***C09D 171/02*** *(2006.01)* ***C09D 175/16*** *(2006.01)*
***C08J 7/04*** *(2006.01)* ***C09D 163/02*** *(2006.01)*
***C09D 7/12*** *(2006.01)* ***C09D 163/00*** *(2006.01)*
***C08F 222/10*** *(2006.01)* ***C08G 18/71*** *(2006.01)*

(86) Internationale Anmeldenummer:
**PCT/EP2010/005311**

(87) Internationale Veröffentlichungsnummer:
**WO 2011/023409 (03.03.2011 Gazette 2011/09)**

(54) **HAFTVERMITTLER FÜR BESCHICHTUNGEN AUF VERSCHIEDENEN SUBSTRATOBERFLÄCHEN**

ADHESIVE AGENT FOR COATINGS ON DIFFERENT SUBSTRATE SURFACES

AGENT ADHÉSIF POUR REVÊTEMENTS SUR DIFFÉRENTES SURFACES DE SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.08.2009 EP 09011137**

(43) Veröffentlichungstag der Anmeldung:
**11.07.2012 Patentblatt 2012/28**

(73) Patentinhaber: **BYK-Chemie GmbH**
**46483 Wesel (DE)**

(72) Erfinder:
- **NAGELSDIEK, René**
  **46499 Hamminkeln (DE)**
- **GOBELT, Bernd**
  **46487 Wesel (DE)**
- **OMEIS, Jürgen**
  **46286 Dorsten-Lembeck (DE)**
- **FREYTAG, Andreas**
  **48301 Nottuln (DE)**
- **GREEFRATH, Dorothée**
  **45481 Mülheim an der Ruhr (DE)**

(74) Vertreter: **Kutzenberger, Helga et al**
**Kutzenberger Wolff & Partner**
**Theodor-Heuss-Ring 23**
**50668 Köln (DE)**

(56) Entgegenhaltungen:
**EP-A2- 0 274 112** **EP-A2- 0 480 363**
**WO-A1-03/082958** **WO-A1-2008/031895**
**WO-A2-2008/077045** **WO-A2-2009/064282**
**WO-A2-2010/020401** **US-A1- 2009 111 912**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 473 569 B1

## Beschreibung

Die vorliegende Erfindung betrifft die Verwendung von wenigstens einem ggf. oligomeren, keine endständigen C=C Doppelbindungen aufweisenden Additionsprodukt mit hydrolysierbaren Silangruppen und weiteren funktionellen Gruppen, vorzugsweise Aminogruppen, als Haftvermittler zwischen einer Beschichtung basierend auf wenigstens einem Polymeren und einer Substratoberfläche, die aus unterschiedlichen Materialien bestehen kann, sowie entsprechend beschichtete Gegenstände oder Artikel.

Beschichtungen von Substraten können unterschiedlichen Zwecken dienen, die von dekorativen Zwecken bis zum Schutz vor schädlichen Einflüssen auf das beschichtete Substrat reichen. Um jede dieser Funktionen ausüben zu können, ist es unverzichtbar, dass die Beschichtung auf der beschichteten Substratoberfläche ausreichend gut haftet, sodass es zu keiner unerwünschten Delaminierung zwischen der Beschichtung und der beschichteten Oberfläche kommt.

Beschichtungen zeichnen sich dadurch aus, dass sie je nach Dicke der Beschichtung schichtförmig oder filmförmig sind, wobei bei einer Beschichtung jeweils nur eine Oberfläche der Beschichtung mit der Oberfläche des zu beschichtenden Substrates verbunden ist. Dies schließt selbstverständlich nicht aus, dass sich diese Anordnung des Substrats mit Beschichtung beliebig oft wiederholen kann, was beispielsweise zu einem Schichtverbund Substrat/Beschichtung/Substrat oder Substrat/Beschichtung/Substrat/Beschichtung führen kann. Charakterisierend für Beschichtungen ist weiterhin, dass sie im allgemeinen eine weitgehend homogene Schichtdicke aufweisen, wie dies für Lackfilme oder Überzüge üblich ist. Kennzeichnend für solche Beschichtungen ist weiterhin, dass das zu beschichtende Material mit dem Beschichtungsmaterial in keiner Weise vermengt oder vermischt wird, wodurch die schicht- bzw. filmförmige Beschichtung nur mit einer ihrer flächenförmigen Oberflächen mit der Oberfläche des beschichteten Materials im Kontakt ist. Als flächenförmige Oberflächen sollen nachfolgend nicht nur ebene Oberflächen verstanden werden, sondern auch unebene Oberflächen, wie z. B. gebogene, gewölbte, gewellte, geknickte oder in anderer Weise ungleichmäßig gestaltete Oberflächen. So stellt beispielsweise auch die Oberfläche eines Drahtes eine flächenförmige Oberfläche eines Körpers im erfindungsgemäßen Sinne dar.

Zur Herstellung von Beschichtungen werden aufgrund der physikalischen und chemischen Eigenschaften oftmals Kunststoffe eingesetzt, um Schichtverbunde umfassend das beschichtete Substrat und die Beschichtung mit den angestrebten Eigenschaften zur Verfügung stellen zu können. Beispielhaft kann für so einen Verbund ein Metallkörper mit flächenförmiger Ausdehnung, dessen Oberfläche mit einem Polyurethan beschichtet ist, genannt werden. Sofern die Beschichtung eine geringere Schichtdicke aufweist, wird sie bevorzugt als Lackfilm bezeichnet, der üblicherweise auf einem physikalisch und/oder chemisch ausgehärteten Lacksystem als Beschichtungsmaterial basiert. Das Beschichtungsmaterial kann ggf. auch in modifizierter Form, z.B. in gefüllter oder verschäumter Form, vorliegen.

Unverzichtbar für alle Formen von Beschichtungen, d. h. für schichtförmige Beschichtung als auch für filmförmige Lacke ist, dass zwischen der beschichteten Oberfläche und der damit verbunden Oberfläche der Beschichtung bzw. des Filmes eine ausreichende Haftung vorliegt, die dauerhaft ist und den angestrebten Zweck, z. B. einer Dekoration und/oder eines Schutzes gegen unterschiedliche, vorzugsweise schädliche Einflüsse gewährleistet.

Einen Überblick über verschiedene zur Verbesserung der Haftung verwendete Substanzklassen wird im Progress in Organic Coatings 1995, 26, 275 gegeben. Daraus geht hervor, dass generell haftungsverbessernde Substanzen in unterschiedlicher Art und Weise eingesetzt werden: wie (i) entweder als eine Vorbehandlungsschicht, wobei zunächst die haftvermittelnde Substanz auf der Substratoberfläche abgeschieden und dann erst die aufzubringende Beschichtung appliziert wird; oder (ii) als Additiv direkt in der aufzubringenden Beschichtung, wodurch vorteilhafter Weise gegenüber der Methode (i) ein Arbeitsschritt entfällt.

Gemäß dem Stande der Technik ist eine vielfach verwendete Substanzklasse, die Beschichtungen zur Verbesserung der Haftung zugesetzt wird, ist die Klasse der niedermolekularen, organofunktionellen Alkoxysilane.

Die Verwendung von Organosilanen als direkte Vorbehandlung auf der zu beschichtenden Metalloberfläche wird z.B. in J. Oil Colour Chem. Assoc. 1982, 65, Seite 415 und die Verwendung von Organosilanen als Additiv im Beschichtungsmaterial wird in derselben Veröffentlichung auf Seite 436 beschrieben.
Weiterhin wird z.B. die Vorbehandlung von Kupfer oder Aluminium mit Silanen in Electrochimica Acta 2006, 51, 6097 beschrieben.

In J. Adhesion Sci. Technol. 2006, 20, 1615 wird eine verbesserte Haftung eines Epoxylacks auf einer Aluminiumsubstratoberfläche durch Einsatz einer Kombination von Glycidyloxypropyltrimethoxysilan und einem weiteren hydrophoben Silan beschrieben.

In Prog. Organic Coatings 2006, 57, 307 wird der Einfluss von Vinyl- und Aminosilanen auf die Haftung zwischen von Epoxy-Klarlacken und Aluminiumoberflächen beschrieben.

Gemäß Proceedings: 28th Annual Meeting of the Adhesion Society, February 13-16, 2005, Seite 173 ff. sowie 486 ff. wird durch den Einsatz von epoxyfunktionellen Organosilanen eine verbesserte Haftung von Epoxylacken auf Aluminiumsubstratoberflächen bzw. von Epoxylacken auf Glassubstraten erreicht.

EP 1157146 beschreibt die Vorbehandlung einer Metalloberfläche mit speziellen Bis-Silyl-Silanen, welche die

Haftung von Gummi auf diesem Substrat verbessert.

WO 2008/003190 beschreibt die Verwendung von Additionsprodukten von Thioalkoxysilanen an multifunktionelle (Meth)acrylate als Haftvermittler für strahlenhärtbare Systeme. Da diese bekannten Additionsprodukte noch freie endständige (Meth)acrylatgruppen aufweisen, können diese bei einer Strahlenhärtung radikalisch miteinvernetzen, was zu unerwünschten Nebenreaktionen führen kann. Außerdem können die Produkte z.B. bei Lagerung infolge der Polymerisationsneigung ihrer Doppelbindungen teilweise oder vollständig durchpolymerisieren, wodurch ihre Funktionsfähigkeit bei ihrer Anwendung beeinträchtigt bzw. verloren gehen kann. Hinzu kommt noch, dass Haftvermittler mit Doppelbindungen als funktionellen Gruppen auf eine Anwendung in radikalisch auszuhärtenden (strahlenhärtenden) Bindemittel-/Polymersystemen beschränkt sind. Universell einsetzbare Haftvermittler, d.h. Haftvermittler für unterschiedliche Bindemittel-/Polymersysteme sind aber eine Forderung der Anwender.

Dies erfüllen auch nicht die in US 4889768 beschriebenen Umsetzungsprodukte von hydroxyfunktionellen (Meth)acrylaten mit isocyanatfunktionellen Alkoxysilanen, die in Verbindung mit Glasfasern angewendet werden, da die Additionsprodukte ebenfalls noch endständige (Meth)acrylatgruppen aufweisen.

Weiterhin wird in WO 2008/003191 die Verwendung von (1) Additionsprodukten von Isocyanat-Silanen an OH- oder NH-funktionelle (Meth)acrylate oder von (2) Additionsprodukten von Diisocyanaten an OH- oder NH-funktionelle (Meth)acrylate und deren anschließende Umsetzung mit Thio- oder Aminosilanen beschrieben, wobei auch diese Haftvermittler noch freie endständige (Meth)acrylatgruppen enthalten, die bei einem Einsatz für strahlenhärtbaren Systemen bei der Strahlenaushärtung radikalisch mit einvernetzen können.

In WO 2009/064282 werden Additionsprodukte von Aminosilanen an vorzugsweise niedermolekulare (Meth)acrylate als Haftvermittler für Polyharnstoffbeschichtungen auf Substraten beschrieben, deren Haftung nicht allen Anforderungen genügt.

Aufgabe der vorliegenden Erfindung war es daher, die Nachteile des Standes der Technik zu vermeiden und eine ausgezeichnete Haftung zwischen Beschichtungen, vorzugsweise Lackfilmen, basierend auf unterschiedlichsten Polymeren und Substratoberflächen aus einer Vielzahl von Materialien zu erreichen.

Erfindungsgemäß gelingt dies durch Verwendung von speziellen Additionsprodukten mit hydrolysierbaren Silangruppen und weiteren funktionellen Gruppen.

Ein Gegenstand der vorliegenden Erfindung ist daher eine Verwendung von

a.) wenigstens einem ggf. oligomeren, keine endständigen C=C-Doppelbindungen aufweisenden Additionsprodukt von wenigstens einem mindestens eine hydrolysierbare Silangruppe aufweisenden Aminosilan und/oder Thiosilan und mindestens einem weiteren Monoamin und/oder Polyamin mit mindestens 2 Aminogruppen, wobei das Monoamin und/oder Polyamin keine hydrolisierbare Silangruppe enthält und mindestens eine primäre oder sekundäre Aminogruppe aufweist, an mindestens eine wenigstens zwei endständige, ethylenisch ungesättigte Doppelbindungen aufweisende Verbindung

und/oder von

b.) wenigstens einem ggf. oligomeren, keine endständigen C=C-Doppelbindungen aufweisenden Additionsprodukt von wenigstens einem mindestens eine hydrolysierbare Silangruppe aufweisendes Isocyanatsilan und/oder Epoxysilan

an mindestens eine wenigstens eine endständige Hydroxygruppe und wenigstens eine endständige, ethylenisch ungesättigte Doppelbindung aufweisende Verbindung in Kombination mit wenigstens einem Monoamin und/oder Polyamin mit mindestens 2 Aminogruppen, wobei das Monoamin und/oder Polyamin keine hydrolisierbare Silangruppe enthält und mindestens eine primäre oder sekundäre Aminogruppe aufweist, als Haftvermittler zwischen einer Beschichtung basierend auf wenigstens einem synthetischen, halbsynthetischen und/oder natürlichen Polymeren und einer damit beschichteten Substratoberfläche in einer Menge von weniger als 5 Gew.%, bezogen auf das Gesamtgewicht der Beschichtung.

Unter Beschichtung wird je nach Schichtdicke eine schichtförmige oder filmförmige jeweils eine weitgehend homogene Schichtdicke aufweisende Beschichtung oder ein Film verstanden, von der oder dem nur eine Oberfläche eine gemeinsame Grenzfläche als einzige Berührungsfläche mit der beschichteten Substratoberfläche aufweist. Vorzugsweise liegen keine Anteile des beschichteten Substrates in irgendeiner Verteilungsform, insbesondere nicht multidispers oder einzeln gestaltet und ggf. lose verbunden wie zu Geweben, Gelegen oder Faserbündeln, in der Beschichtung vor, sodass die einzige Berührungsfläche zwischen Beschichtung und beschichtetem Substrat die jeweilige, ggf. vorbehandelte Substratoberfläche und eine Beschichtungsoberfläche vorliegt. Dies schließt selbstverständlich nicht aus, dass diese Anordnung von Substrat und Beschichtung beliebig oft wiederholt werden kann, was beispielsweise zu einem Schichtverbund Substrat/Beschichtung/Substrat entsprechend einer Sandwichanordnung, oder Substrat/Beschichtung/Substrat/Beschichtung führt.

Ausgenommen vom Gegenstand der Erfindung sind daher vorzugsweise insbesondere ausgehärtete Polymermischungen, vorzugsweise Polymerbetonmischungen, die auf einem mindestens oligomeres Additionsprodukt a)

und/oder b), einem auszuhärtenden Bindemittelsystem basierend auf wenigstens einem wenigstens zwei Epoxydendgruppen aufweisenden Polymeren, wenigstens einer Härterkomponente und ggf. einem Beschleuniger und wenigstens 20 Gew.%, bezogen auf das Gesamtgewicht der Polymermischung, anorganischen, ggf. multipartikulären Füllstoffen als Zuschlagsstoffen und ggf. üblichen Hilfsstoffen beruhen.

Durch den Einsatz der vorstehend aufgeführten Additionsprodukte a) bzw. b) als Haftvermittler bei der Herstellung von Beschichtungen gelingt es überraschenderweise, die Haftung zwischen Beschichtungen auf Basis synthetischer, halbsynthetischer und/oder natürlicher Polymeren und Substratoberflächen, die aus den verschiedensten Materialien bestehen, deutlich zu verbessern und damit schädigenden Einflüssen, wie z. B. Korrosion entscheidend vorzubeugen. Die Beschichtung des Substrats kann vorzugsweise nach allen aus dem Stand der Technik bekannten Auftragungsverfahren, wie z.B. Streichen, Besprühen, Spritzen, Rollen, Rakeln, Tauchen erfolgen.

Die erfindungsgemäß zum Einsatz kommenden Haftvermittler sind ggf. oligomere, keine endständigen C=C Doppelbindungen aufweisende Additionsprodukte, die sich im Falle des Additionsproduktes a) von wenigstens einem, mindestens eine hydrolysierbare Silangruppe aufweisenden Aminosilan und/oder Thiosilan und mindestens einem Monoamin und/oder Polyamin mit mindestens 2 Aminogruppen durch jeweilige Addition an mindestens eine, wenigstens zwei endständige ethylenisch ungesättigte Doppelbindung aufweisende Verbindung bzw. im Falle des Additionsproduktes b) durch Addition von wenigstens einem, mindestens eine hydrolisierbare Silangruppe aufweisenden Isocyanatsilan oder Epoxysilan an mindestens eine, wenigstens eine endständige Hydroxygruppe und wenigstens eine endständige, ethylenisch ungesättigte Doppelbindung aufweisende Verbindung in Kombination mit wenigstens einem Monoamin und/oder Polyamin mit mindestens zwei Aminogruppen ableiten.

Vorzugsweise können als Verbindungen, die wenigstens eine hydrolysierbare Silangruppe aufweisen, zur Herstellung der Additionsprodukte a) bzw. b) Verbindungen der nachstehend aufgeführten allgemeinen Formel eingesetzt werden in der

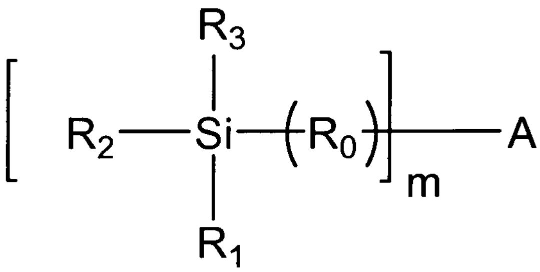

A für eine Epoxidgruppe, eine Glycidyloxygruppe, eine Isocyanatgruppe, eine-SH Gruppe, oder eine -N(H)-X Gruppe steht, wobei X für Wasserstoff, einen ggf. verzweigten Alkylrest mit 1 bis 12 C-Atomen, einen Arylrest mit 6 bis 10 C-Atomen oder eine Cycloalkylrest mit 4 bis 6 C-Atomen steht und jeder dieser X-Reste mit einer oder mehreren primären oder sekundären Aminogruppe substituiert sein kann, oder A eine -NH-Gruppe bedeutet, wenn m eine ganze Zahl 2 ist,

$R_0$ für einen ggf. verzweigten Alkylenrest mit 1 bis 12 C-Atomen, eine Cycloalkylenrest mit 4 bis 6 C-Atomen oder einen Arylenrest mit 6 bis 10 C-Atomen steht,

$R_1$ ,gleich oder verschieden von $R_2$ und $R_3$, für einen ggf. verzweigten Alkylrest mit 1 bis 7 C-Atomen, bevorzugt 1 bis 3 C-Atomen, ein Halogen, eine -O-C(=O)-$R_4$ Gruppe oder eine -O$R_4$ Gruppe steht, wobei $R_4$, gleich oder verschieden für Wasserstoff, eine Methoxyethylgruppe oder einen ggf. verzweigten Alkylrest mit 1 bis 7 C-Atomen, bevorzugt mit 1 bis 3 C-Atomen, oder einen Cycloalkylrest mit 4 bis 6 C-Atomen steht,

$R_2$ ,gleich oder verschieden von $R_1$ und $R_3$, für einen ggf. verzweigten Alkylrest mit 1 bis 7 C-Atomen, bevorzugt 1 bis 3 C-Atomen, ein Halogen, eine -O-C(=O)-$R_4$ Gruppe oder eine -O$R_4$ Gruppe steht, wobei $R_4$, gleich oder verschieden für Wasserstoff, eine Methoxyethylgruppe oder einen ggf. verzweigten Alkylrest mit 1 bis 7 C-Atomen, bevorzugt mit 1 bis 3 C-Atomen, oder einen Cycloalkylrest mit 4 bis 6 C-Atomen steht,

$R_3$ ,gleich oder verschieden von $R_1$ und $R_2$, für eine -O-C(=O)-$R_4$-Gruppe, ein Halogen oder eine -O$R_4$-Gruppe steht, wobei $R_4$, gleich oder verschieden für Wasserstoff, eine Methoxyethylgruppe oder einen ggf. verzweigten Alkylrest mit 1 bis 7 C-Atomen, bevorzugt mit 1 bis 3 C-Atomen , oder einen Cycloalkylrest mit 4 bis 6 C-Atomen steht,

und

m für eine ganze Zahl 1 oder 2 steht.

Vorzugsweise werden als ein wenigstens eine hydrolysierbare Silangruppe aufweisendes Aminosilan wenigstens eine Verbindung ausgewählt aus der Gruppe umfassend 4-Aminobutyltriethoxysilan, 1-Amino-2-(dimethylethoxysilyl)propan, N-(2-Aminoethyl)-3-aminoisobutyldimethylmethoxysilan, N-(2-Aminoethyl)-3-aminoisobutylmethyldimethoxysilan, (Aminoethylaminomethyl)phenethyltrimethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(6-Aminohexyl)aminomethyltrimethoxysilan, N-(6-Aminohexyl)aminopropyltrimethoxysilan, N-(2-Aminoethyl)-11-aminondecyltrimethoxysilan, 3-(m-Aminophenoxy)propyltrimethoxysilan, m-Aminophenyltrimethoxysilan, p-Aminophenyltrimethoxysilan, N-3-[Amino(polypropylenoxy)]aminopropyltrimethoxysilan, 3-Aminopropyldiisopropylethoxysilan, 3-Aminopropyldimethylethoxysilan, 3-Aminopropylmethyldiethoxysilan, 3-Aminopropyltriethoxysilan, 3-Aminopropyltrimethoxysilan, 11-Aminoundecyltriethoxysilan, 3-Aminopropyltricyclohexoxysilan, 3-Aminopropyldicyclohexoxymethylsilan, 3-Aminopropyldicyclohexoxyethylsilan, N-Methylaminopropyltricyclohexoxysilan, N-Phenylaminopropyltricyclohexoxysilan, N-Methylaminopropylmethyldicyclohexoxysilan, N-Phenylaminopropylmethyldicyclohexoxysilan, Bis(2-hydroxyethyl)-3-aminopropyltriethoxysilan, Bis(methyldiethoxysilylpropyl)amin, Bis(triethoxysilylpropyl)amin, Bis(trimethoxysilylpropyl)amin, Bis[(3-trimethoxysilyl)propyl]ethylendiamin, Bis(3-trimethoxysilylpropyl)-N-methylamin, n-Butyl-3-aminopropyltrimethoxysilan, t-Butyl-3-aminopropyltrimethoxysilan, 3-(2,4-Dinitrophenylamino)propyltriethoxysilan, N-Ethylaminoisobutylmethyldiethoxysilan, N-Ethylaminoisobutyltrimethoxysilan, N-Methylaminopropylmethyldimethoxysilan, N-Methylaminopropyltrimethoxysilan, N-Phenylaminomethyltriethoxysilan, N-Phenylaminomethyltrimethoxysilan, N-Cyclohexyl-3-aminopropyltrimethoxysilan, 3-(N-Styrylmethyl-2-aminoethylamino)propyltrimethoxysilan, (3-Trimethoxysilylpropyl)diethylentriamin, (3-Triethoxysilylpropyl)diethylentriamin, N-Cyclohexylaminomethylmethyldiethoxysilan, N-Cyclohexylaminomethyltriethoxysilan, N-Phenylaminomethyltriethoxysilan, 3-Aminopropyldimethoxymethylsilan, 4-Amino-3,3-dimethylbutyldimethoxymethylsilan, 4-Amino-3,3-Dimethylbutyldimethoxymethylsilan und deren Mischungen eingesetzt.

Als ein wenigstens eine hydrolysierbare Silangruppe aufweisendes Thiosilan kann wenigstens eine Verbindung ausgewählt aus der Gruppe umfassend Mercaptomethylmethyldiethoxysilan, 3-Mercaptopropylmethyldimethoxysilan, 3-Mercaptopropyltriethoxysilan, 3-Mercaptopropyltrimethoxysilan oder deren Mischungen eingesetzt werden.

Als ein wenigstens eine hydrolysierbare Silangruppe aufweisendes Isocyanatsilan kann wenigstens eine Verbindung ausgewählt aus der Gruppe umfassend 3-Isocyanatopropyldimethylchlorsilan, 3-Isocyanatopropyltriethoxysilan, 3-Isocyanatopropyltrimethoxysilan, (Isocyanatomethyl)methyldimethoxysilan oder deren Mischungen eingesetzt werden.

Darüber hinaus kann als eine wenigstens eine hydrolysierbare Silangruppe aufweisende Epoxysilan-Verbindung eine Verbindung ausgewählt aus der Gruppe umfassend 2-(3,4-Epoxycyclohexyl)ethyltriethoxysilan, 2-(3,4-Epoxycyclohexyl)ethyltrimethoxysilan, 5,6-Epoxyhexyltriethoxysilan, 5,6-Epoxyhexyltrimethoxysilan, 5,6-Epoxyhexylmethyldimethoxysilan, 5,6-Epoxyhexylmethyldiethoxysilan, 5,6-Epoxyhexyldimethylethoxysilan, 5,6-Epoxyhexyldimethylmethoxysilan, (3-Glycidoxypropyl)dimethylethoxysilan, (3-Glycidoxypropyl)dimethylmethoxysilan, (3-Glycidoxypropyl)methyldiethoxysilan, (3-Glycidoxypropyl)methyldimethoxysilan, (3-Glycidoxypropyl)triethoxysilan, (3-Glycidoxypropyl)trimethoxysilan oder deren Mischungen eingesetzt werden.

Als Amine, die keine hydrolysierbare Silangruppe enthalten und die bei der Herstellung der Haftvermittler a) und b) zwingend zum Einsatz kommen, sind prinzipiell alle Verbindungen geeignet, die mindestens eine primäre oder sekundäre Aminogruppe, vorzugsweise mindestens eine primäre Aminogruppe, aufweisen.

Bevorzugte Amine sind verzweigte und unverzweigte aliphatische Amine vorzugsweise mit $C_1$-$C_{20}$, die ggf. mit Hydroxygruppen und/ oder Alkoxygruppen substitutiert sein können, cycloaliphatische Amine mit $C_4$-$C_{20}$, die ggf. mit Hydroxygruppen und/oder Alkoxygruppen substituiert sein können, aromatische Amine mit $C_6$-$C_{24}$, die gebenenfalls mit Hydroxygruppen und / oder Alkoxygruppen substituiert sein können.

Solche bevorzugte Amine sind Monomethylamin, Monoethylamin, n-Propylamin, Isopropylamin, Butylamin, n-Pentylamin, t-Butylamin, Hexylamin, Octylamin, 2-Ethylhexylamin, Dodecylamin, Tridecylamin, Oleylamin, Dimethylamin, Diethylamin, Dipropylamin, Dibutylamin, Dihexylamin, Bis(2-ethylhexyl)amin, Bis(tridecyl)amin, 3-Methoxypropylamin, 2-Ethoxyethylamin, 3-Ethoxypropylamin, 3-(2-Ethylhexyloxy)propylamin, Cyclopentylamin, Cyclohexylamin, 1-Phenylethylamin, Dicyclohexylamin, Benzylamin, N-Methylbenzylamin, N-Ethylbenzylamin, 2-Phenylethylamin, Anilin, o-Toluidin, 2,6-Xylidin, 1,2-Phenylendiamin, 1,3-Phenylendiamin, 1,4-Phenylendiamin, o-Xylylendiamin, m-Xylylendiamin, p-Xylylendiamin, Ethylendiamin, 1,3-Propandiamin, 1,2-Propandiamin, 1,4-Butandiamin, 1,2-Butandiamin, 1,3-Butandiamin, Neopentandiamin, Hexamethylendiamin, Octamethylendiamin, Isophorondiamin, 4,4'-Diaminodicyclohexylmethan, 3,3'-Dimethyl-4,4'-diaminodicyclohexylmethan, 4,4'-Diaminodiphenylmethan, 4,9-Dioxyadodecan-1,12-diamin, 4,7,10-Trioxatridecan-1,13-diamin, 3-(Methylamino)propylamin, 3-(Cyclohexylamino)propylamin, 3-(Diethylamino)ethylamin, 3-(Dimethylamino)propylamin, 3-(Diethylamino)propylamin, Diethylentriamin, Triethylentetramin, Tetraethylenpentamin, 3-(2-Aminoethyl)aminopropylamin, Dipropylentriamin, N,N-Bis-(3-aminopropyl)methylamin, N,N'-Bis(3-aminopropyl)ethylendiamin, Bis(3-dimethylaminopropyl)amin, N-(3-Aminopropyl)imidazol, Monoethanolamin, 3-Amino-1-propanol, Isopropanolamin, 5-Amino-1-pentanol, 2-(2-Aminoethoxy)ethanol, Aminoethylethanolamin, N-(2-Hydroxyethyl)-1,3-Propandiamin, N-Methylethanolamin, N-Ethylethanolamin, N-Butylethanolamin, Diethanolamin, 3-((2-Hydroxyethyl)amino)-1-propanol, Diisopropanolamin, N-(2-Hydroxyethyl)anilin, 1-Methyl-3-phenylpropylamin, Furfurylamin, N-Isopropylbenzylamin, 1-(1-Naphthyl)ethylamin, N-Benzylethanolamin, 2-(4-Methoxyphenyl)ethylamin, N,N-Dimethylaminoethylamin, Ethoxypropylamin, 2-Methoxyethylamin, 2-Ethoxyethylamin, 2-Cyclohexenylethylamin, Piperidin, Diethylaminopropylamin, 4-Methylcyclohexylamin, Hydroxynovaldiamin, 3-(2-Ethylhexyloxy)propylamin, Tris(2-aminoethyl)amin, N,N'-Di-tert-butylethylendiamin, Tris(hydroxymethyl)aminomethan.

Desweiteren können aminoterminale Polyether eingesetzt werden, bei denen der Polyether auf Basis von einem Alkylenoxid, vorzugsweise Ethylenoxid und/oder Propylenoxid und/oder ggf. weiterer Epoxide (z.B. Butylenoxid, Styroloxid) oder Tetrahydrofuran besteht und die mit Aminogruppen funktionalisiert sind.

Die Verbindungen können je nach Strukturaufbau eine, zwei oder mehr als zwei Aminogruppen tragen. Solche Produkte werden z.B. von der Firma Huntsman unter dem Namen "Jeffamine" oder von der Firma BASF als "Polyetheramin" vertrieben und tragen z.B. die Bezeichnungen M-600, M-1000, M-2005, M-2070, D-230, D-400, D-2000, D-4000, T-403, T-3000, T-5000, Polytetrafuranamin 1700, ED-600, ED-900, ED-2003, HK-511, EDR-148, EDR-176, SD-231, SD-401, SD-2001, ST-404.

Ferner können als Amine dentritische Polyiminstrukturen wie vorzugsweise Polyethylenimine und/oder Polypropylenimine, besonders bevorzugt Polyethylenimine eingesetzt werden. Diese Polyimine können ggf. auch durch partielle Alkoxylierung der Aminofunktionen modifiziert sein.

Als Reaktionspartner für die mindestens eine hydrolysierbare Silangruppe aufweisenden Verbindungen, zur Herstellung der Additionsprodukte a) und/oder b) eignen sich ggf. oligomere oder ggf. polymere Verbindungen. Diese oligomeren bzw. polymeren Verbindungen mit funktionellen Endgruppen sind vorzugsweise polydispers, d. h. sie weisen keine einheitliche Kettenlänge auf, und werden auch polydispers zur Addition mit den genannten Silanverbindungen eingesetzt.

Diese polydispersen, zumindest oligomeren Verbindungen werden vorzugsweise mit molekular einheitlichen (d. h. monodispersen), hydrolysierbare Silangruppen enthaltenden organischen Verbindungen durch Additionsreaktionen umgesetzt.

Diese Umsetzung zur Herstellung der Haftvermittler basiert bei dem Additionsprodukt a) auf der Addition an ggf. zumindest oligomere Verbindungen, die wenigstens zwei endständige ethylenisch ungesättigte Doppelbindungen aufweisen, wobei diese endständigen Doppelbindungen Acrylat- und/oder Methacrylatgruppen, bevorzugt Acrylatgruppen sind. An die ggf. oligomere Verbindung werden mindestens ein, wenigstens eine hydrolysierbare Silangruppe aufweisendes Aminosilan und ggf. Thiosilan addiert.

Bei der Additionsreaktion werden vorzugsweise 5 bis 100 mol%, besonders bevorzugt 10 bis 90 mol%, ganz besonders bevorzugt 15 bis 80 mol% der Doppelbindungen mit den Aminosilanen und/oder Thiosilanen zur Reaktion gebracht. Die restlichen bis zu 95 mol%, besonders bevorzugt 90 bis 10 mol%, ganz besonders bevorzugt 85 bis 20 mol% der Doppelbindungen werden mit einer weiteren aminischen Komponente, welche keine Silangruppen enthält, zur Reaktion gebracht.

Die Herstellung des Haftvermittlers b) erfolgt vorzugsweise durch Addition an ggf. oligomere Verbindungen, die wenigstens eine endständige Hydroxygruppe und wenigstens eine endständige, ethylenisch ungesättigte Doppelbindung aufweisen. Bei diesen endständigen Doppelbindungen handelt es sich um Acrylat- und/oder Methacrylatgruppen, bevorzugt um Acrylatgruppen. An die ggf. oligomere Verbindung werden ein mindestens eine hydrolysierbare Silangruppe aufweisendes Isocyanatsilan und/oder Epoxysilan sowie mindestens ein weiteres nicht silanfunktionelles Amin addiert.

Letztere Umsetzung wird vorzugsweise in zwei Schritten durchgeführt, wobei zuerst das Isocyanatsilan und/oder Epoxysilan an die Hydroxygruppen der ggf. oligomeren Verbindung addiert wird und hiernach die endständigen Doppelbindungen mit einem nicht silanfunktionellen Monoamin oder Polyamin zur Reaktion gebracht werden.

Dabei werden die Hydroxyl-gruppen mit Epoxysilanen und / oder einem Isocyanatosilanen vorzugsweise zu mehr als 80 mol%, besonders bevorzugt zu mehr als 90 mol%, ganz besonders bevorzugt zu mehr als 95 mol% umgesetzt und die Doppelbindungen mit einem nicht silanfunktionellen Mono- oder Polyamin vollständig umgesetzt.

Die entsprechenden Reaktionsbedingungen, die bei den Additionsreaktionen zur Herstellung der Haftvermittler a) bzw. b) jeweils einzuhalten sind, sind dem Fachmann bekannt.

Bevorzugte Reaktionspartner für die mindestens eine hydrolysierbare Silangruppe aufweisenden Verbindungen, zur Herstellung der Additionsprodukte a) und/oder b) sind Ester von aliphatischen Diolen und Polyolen mit 1 - 12 C-Atomen oder cycloaliphatischen Diolen und Polyolen mit 4 - 12 C-Atomen oder aromatischaliphatischen Diolen und Polyolen mit 4 - 16 C-Atomen, deren OH-Gruppen mit ethylenischen ungesättigten Monocarbonsäuren, vorzugsweise (Meth)acrylsäure, zur Herstellung von Additionsprodukt (a) vollständig und zur Herstellung von Additionsprodukt (b) teilweise verestert sind. Geeignete Diole zur Veresterung mit (Meth)acrylsäure sind vorzugsweise Ethandiol, 1,2-Propandiol, 1,3-Propandiol, 1,2-Butandiol, 1,4-Butandiol, 1,2-Pentandiol, 1,4-Pentandiol, 2,4-Pentandiol, 1,2-Hexandiol, 1,5-Hexandiol, 1,6-Hexandiol, 2,5-Hexandiol, 1,7-Heptandiol, 1,8-Octandiol, Neopentylglycol, Bisphenol A, Glycerin,

Trimethylolpropan, Pentaerythrit sowie ggf. Alkoxylierungsprodukte dieser Di- und Polyole mit Ethylenoxid und Propylenoxid.

Ggf. sind die zur Herstellung des jeweiligen Additionsproduktes zum Einsatz kommenden Verbindungen mit endständigen ethylenisch ungesättigten Doppelbindungen und ggf. Hydroxygruppen, oligomere Verbindungen mit mindestens 2, ggf. polymere Verbindungen mit mindestens 4 wiederkehrenden Struktureinheiten. Solche Verbindungen werden ausgewählt aus der Gruppe umfassend Polyether, gesättigte Polyester, gesättigte Polyesterpolyether, Polyamide, gesättigte Polyesteramide, die entsprechend modifizierte Endgruppen aufweisen. Erfindungsgemäß werden unter gesättigtem Polyester auch entsprechende Polycarbonate verstanden.

Als Polyether eignen sich Verbindungen mit der wiederkehrenden Struktureinheit

$$-[-O-W^1-]-$$

wobei $W^1$ ein aliphatischer Rest mit 1 bis 15 C-Atomen, bevorzugt mit 2 bis 8 C-Atomen, besonders bevorzugt mit 2 bis 4 C-Atomen, ein aromatischer oder cycloaliphatischer Ring oder eine aromatisch-aliphatische Gruppierung ist. Die Ethergruppierung kann auch Teil eines kettenständigen Ringes sein.

Bevorzugte gesättigte Polyether sind Polyethylenoxide, Polypropylenoxide, Poly(trimethylen)oxide, Polybutylenoxide, Polystyroloxide, Ethylenoxid/Propylenoxid-Copolyether, Poly(tetrahydrofurane), die ggf. Bisphenol A-Einheiten in der Hauptkette enthalten können, Copolymere von Struktur-Einheiten der genannten Polyether oder Mischungen von wenigstens 2 der genannten Polyethern. Weiterhin können auch Polyether eingesetzt werden, die sich von den sog. Glycidether ableiten und durch Umsetzung von Bisphenolen mit Epichlorhydrin erhalten werden. Besonders bevorzugte Endgruppe modifizierte Polyether leiten sich von Polyethylenoxide, Polypropylenoxide und Polyether aus Ethylenoxid/Propylenoxid ab. Bevorzugt weisen die Polyether ein Molekulargewicht von 100 bis 10000 g/mol, besonders bevorzugt von 150 bis 7500 g/mol, ganz besonders bevorzugt von 200 bis 3000 g/mol auf.

Als Endgruppe modifizierte gesättigte Polyester eigenen sich bevorzugt entsprechend modifizierte, gesättigte Polyester, d. h. Polyester, die nicht ethylenisch ungesättigt sind, wie Polyester von Lactonen wie z. B. ε-Caprolacton und/oder δ-Valerolacton sowie Polyester, die durch Kondensation von α,ω-Hydroxycarbonsäuren oder durch Kondensation von Dicarbonsäuren mit Diolen erhalten worden sind. Als Säurekomponenten können entweder Dicarbonsäuren, deren Säurehalogenide, Säureanhydride oder Ester eingesetzt werden; insbesondere folgende Dicarbonsäuren sind geeignet: Oxalsäure, Malonsäure, Dimethylmalonsäure, Bernsteinsäure, Glutarsäure, Adipinsäure, Trimethyladipinsäure, Pimelinsäure, 2,2-Dimethylglutarsäure, Azelainsäure, Sebacinsäure, 1,3-Cyclopentandicarbonsäure, 1,2-Cyclohexandicarbonsäure, 1,4-Cyclohexandicarbonsäure, Phthalsäure, Terephtalsäure, Isophthalsäure, 2,5-Norbornandicarbonsäure, 1,4-Naphthalindicarbonsäure, Diphensäure, 4,4'-Oxydibenzoesäure, Diglycolsäure, Thiodipropionsäure, 4,4'-Sulfonyldibenzoesäure, 2,5-Naphthalindicarbonsäure, Tricyclodecandicarbonsäure.

Geeignete Diole zur Umsetzung mit den gesättigten Dicarbonsäuren sind vorzugsweise Ethandiol, 1,2-Propandiol, 1,3-Propandiol, 1,2-Butandiol, 1,4-Butandiol, 1,2-Pentandiol, 1,4-Pentandiol, 2,4-Pentandiol, 1,2-Hexandiol, 1,5-Hexandiol, 1,6-Hexandiol, 2,5-Hexandiol, 1,7-Heptandiol, 1,8-Octandiol, Neopentylglycol.

Besonders bevorzugte zum Einsatz kommende oligomere, ggf. polymere Polyester sind Poly(ε-caprolacton), Poly(δ-valerolacton), Caprolacton/Valerolacton-Copolyester, Polylactid, Polyethylenterephthalat und Polybutylenterephthalat.

Unter Endgruppen modifizierte Polyester werden auch Polycarbonate mit der wiederkehrenden Struktureinheit

$$-[-W^2-O-C(=O)-O-]-$$

verstanden. Hierbei ist $W^2$ ein aliphatischer Rest mit 2 bis 15 C-Atomen, bevorzugt mit 2 bis 12 C-Atomen, besonders bevorzugt mit 2 bis 8 C-Atomen oder ein aromatischer oder cycloaliphatischer Rest oder eine aromatisch-aliphatische Gruppierung, vorzugsweise ein Bisphenol A-Rest oder davon abgeleiteter Rest. Die Carbonatgruppierung kann auch Teil eines kettenständigen Rings sein.

Auch gemischte, gesättigte Polyester der Kohlensäure und anderer Säuren (Polyester-Polycarbonate) sind geeignet. Bevorzugte Polycarbonate sind Bisphenol A-Polycarbonat, Bisphenol F-Polycarbonat, Bisphenol AF-Polycarbonat, Polycarbonate auf Basis von Bisphenol A und Bisphenol TMC sowie auf Basis von 1,6-Hexandiol. Erfindungsgemäß werden unter dem Begriff Polyester auch Polycarbonate oder Copolyestercarbonate verstanden.

Bevorzugte Polyester sind Polyester mit einem Molekulargewicht von 150 bis 15000 g/mol, besonders bevorzugt von 200 bis 7500 g/mol, ganz besonders bevorzugt von 250 bis 3000 g/mol.

Auch Endgruppen-modifizierte Polyamide mit der wiederkehrenden Struktureinheit

$$-C(=O)-NH-$$

können zur Herstellung der erfindungsgemäß zum Einsatz kommenden Haftvermittler verwendet werden. Als typische

Bausteine für Polyamide kommen in Frage: ε-Caprolactam, Aminocapronsäure, Oenatholactam, 7-Aminoheptansäure, 11-Aminoundecansäure, 9-Aminononansäure oder Mischungen davon. Wird das Polyamid durch Polykondensation eines Diamins und einer Dicarbonsäure hergestellt, so können als Diamine vorzugsweise Tetramethylendiamin, Hexamethylendiamin, Nonamethylendiamin, Decamethylendiamin, Undecanmethylendiamin, Dodecamethylendiamin, para-Aminoanilin oder meta-Xylendiamin und als Dicarbonsäure, vorzugsweise Adipinsäure, Sebacinsäure, Dodecandionsäure, Glutarsäure, Terephthalsäure, 2-Methylterephthalsäure, Isophthalsäure, Dimersäure und Naphthalindicarbonsäure eingesetzt werden. Zusätzlich zu Disäuren oder Diaminen können auch polyfunktionelle Verbindungen, wie Trimellithsäure und Pyromellithsäure, die 3 oder mehr funktionelle Gruppen aufweisen, bis zu 5 mol% mit verwendet werden.

Bevorzugte Polyamide sind solche mit einem Molekulargewicht von 150 bis 15000 g/mol, besonders bevorzugt von 200 bis 7500 g/mol, ganz besonders bevorzugt von 250 bis 3000 g/mol.

Besonderes bevorzugte zum Einsatz kommende Polyamide leiten sich von Nylon 6, Nylon 7, Nylon 8, Nylon 10, Nylon 2, Nylon 66, Nylon 69, Nylon 610, Nylon 611, Nylon 612, Nylon 6T, Nylon 6/66, Nylon 6/12, Nylon 6/6T ab.

Auch Endgruppen modifizierte Polyesteramide mit den vorstehend aufgeführten Struktureinheiten können verwendet werden.

Die aufgeführten Polymere können linear, verzweigt oder sternförmig aufgebaut sein. Der Zugang zu verzweigten oder sternförmigen Polymeren ist durch Einsatz geeigneter multifunktioneller Ausgangsverbindungen möglich.

Besonders bevorzugte oligomere bzw. polymere Verbindungen sind Polyethylenoxide, Polypropylenoxide, Polystyroloxid, Polyether von Ethylenoxid/Propylenoxid sowie Poly(ε-Caprolacton)ester.

Die erfindungsgemäß zum Einsatz kommenden Haftvermittler liegen in der Beschichtung mit weniger als 5 Gew.%, bevorzugt weniger als 2 Gew.%, besonders bevorzugt weniger als 1 Gew.%, bezogen auf das Gesamtgewicht der Beschichtung, vor.

Alternativ kann der Haftvermittler auch als eine Komponente in einem auf der Substratoberfläche vor der eigentlichen Beschichtung aufgebrachten Voranstrich vorzugsweise in der vorstehend angegebenen Menge eingesetzt werden.

Die erfindungsgemäß zum Einsatz kommenden Haftvermittler a) bzw. b) eignen sich zur Verbesserung der Haftung von Beschichtungen, die auf wenigstens einem Polymeren als Beschichtungsmaterial basieren, wobei bei der Herstellung der Beschichtung vorzugsweise wenigstens eine funktionelle Gruppe des als Haftvermittler vorliegenden Additionsproduktes a) und/oder b) mit reaktiven Gruppen des Beschichtungsmaterials zumindest teilweise umgesetzt worden ist.

Vorzugsweise können die Beschichtungen auf einem synthetischen, halbsynthetischen oder natürlichen Polymeren oder einer Mischung aus wenigstens zwei dieser Polymeren basieren. Besonders bevorzugt kann als Beschichtungsmaterial wenigstens ein Polymeres ausgewählt aus der Gruppe umfassend Polyurethane, gesättigte Polyester, Polyamide, Polyolefine, Polyvinylchloride, Polystyrole, Polycarbonate, Poly(meth)acrylate, Acrylnitril/ Butadien/Styrolcopolymere, ungesättigte Polyester, Epoxydharze, Phenol-Formaldehydharze, Melamin-Formaldehydharze, Phenolharze, Silikonharze, Polylactide, Polyvinylacetate, Celluloseether, Celluloseester, Polysaccharide, Stärke oder eine Mischung von wenigstens zwei der genannten Polymeren eingesetzt werden.

Durch den Einsatz der erfindungsgemäß zum Einsatz kommenden Haftvermittler kann eine Beschichtung basierend auf zumindest einem der vorstehend genannten Polymeren auf eine Vielzahl von Substratoberflächen mit einer ausgezeichneten Haftung aufgebracht werden. Zu diesen Substratoberflächen, die mit solchen Polymeren beschichtet werden können, zählen Metalloberflächen wie sie nachstehend aufgeführt werden, Glasoberflächen, von dem Beschichtungspolymeren ggf. unterschiedliche Kunststoffoberflächen, wie z. B. Oberflächen eines ggf. gefüllten und/oder glasfaserverstärkten, thermoplastischen, duromeren und elastomeren Kunststoff oder einer Mischung aus wenigstens zwei dieser genannten Kunststoffe oder die Oberfläche eines bereits vorhandenen Anstrichs, beispielsweise basierend auf einem ggf. gefüllten und/oder pigmentierten Epoxy-, Alkyd- oder Acrylatharz. Ebenso kann erfolgreich eine Beschichtung basierend auf den vorstehend genannten Polymeren mit Hilfe der erfindungsgemäß zum Einsatz kommenden Haftvermittler auf eine Oberfläche eines Cellulosematerials, vorzugsweise eines Papiers, insbesondere eines unbehandelten oder vorbehandelten, getränkten, gebeizten oder imprägnierten Papiers, welches ggf. mit Fasern aus Glas, Kunststoff und/oder Kohlenstoff verstärkt ist, oder auf einer ggf. vorbehandelten Holzoberfläche mit ausgezeichneter Haftung aufgebracht werden.

Alternativ zu einer Beschichtung mit einer schichtförmigen Anordnung basierend auf einem der vorstehend genannten Polymeren kann auch eine filmförmige Beschichtung basierend auf einem aushärtbaren Lacksystem mit Hilfe der erfindungsgemäß zum Einsatz kommenden Haftvermittler a) und/oder b) mit Substratoberflächen aus unterschiedlichsten Materialien mit ausgezeichneter Haftung verbunden werden. Auch darin zeigt sich die universelle Einsetzbarkeit der erfindungsgemäß verwendeten Haftvermittler.

Als härtbare Bindemittel werden bevorzugt solche genutzt, die mit den hydrolysierbaren Silangruppen des Vermittlers a) oder b) oder mit dessen weiteren funktionellen Gruppen, vorzugsweise Aminogruppen, zumindest teilweise reagieren können. Für diese Bindemittel existieren mannigfaltige Beispiele, wie sie zum Beispiel in T. Brock / M. Groteklaes / P. Mischke, "Lehrbuch der Lacktechnologie", Vincentz Verlag, Hannover 1998 und in D. Stoye / W. Freitag,

"Lackharze - Chemie, Eigenschaften, Anwendung", Carl Hanser Verlag, München/Wien 1996 und in T. A. Turner, "Canmaking - The Technology of Metal Protection and Decoration", Blackie Academic & Professional, London 1998 und in H.-G. Elias, "Polymere - Von Monomeren und Makromolekülen zu Werkstoffen", Hüthig & Wepf Verlag, Heidelberg/Oxford 1996 sowie in B. Meuthen, A.-S. Jandel, "Coil Coating - Bandbeschichtung: Verfahren, Produkte und Märkte", Friedr. Vieweg & Sohn Verlag, Wiesbaden 2005 beschrieben werden.

Als ein bevorzugtes Beispiel für ein aushärtbares Bindemittelsystem sind sogenannte Epoxybindemittel, bei denen mindestens eine härtbare, wenigstens zwei Epoxid-Gruppen aufweisende Komponente in Verbindung mit einer Härterkomponente eingesetzt wird. Vorzugsweise eignet sich als Epoxid-Gruppen aufweisende Bindemittelkomponente ein Epoxyharz mit mindestens 2 Epoxid-Endgruppen, vorzugsweise ein polymeres Umsetzungsprodukt basierend auf Epichlorhydrin mit ggfs. substituierten, mehrwertigen Phenolen und/oder mehrwertigen, aliphatischen oder alicyclischen Alkoholen. Der erfindungsgemäß zum Einsatz kommende Haftvermittler kann bevorzugt durch seine aminischen Gruppen mit den Epoxid-Gruppen des Bindemittelsystems zur Reaktion gebracht werden.

Ein weiteres Beispiel für ein geeignetes aushärtbares Bindemittelsystem stellen Silikon-basierte Bindemittelsysteme dar, bei denen die Härtung durch einen Kondensationsprozess der vorhandenen Alkoxysilangruppen, Acyloxysilangruppen bzw. Silanolgruppen bis zu Polysiloxanen stattfindet. Die erfindungsgemäß zum Einsatz kommenden Haftvermittler können bevorzugt durch ihre Silangruppen bzw. deren hydrolysierte Form mit den Alkoxysilan-, Acyloxy- bzw. Silanolgruppen des Bindemittelsystems reagieren.

Ein weiteres Beispiel für ein geeignetes aushärtbares Bindemittelsystem sind Bindemittel, die wenigstens difunktionelle Isocyanatverbindungen enthalten, welche mit mindestens difunktionellen Isocyanat-reaktiven Komponenten, wie z.B. Alkoholgruppen oder Aminogruppen enthaltenden Verbindungen, vernetzt werden. Die erfindungsgemäßen Additionsprodukte können bevorzugt durch ihre aminischen Gruppen mit den Isocyanat-Gruppen des Bindemittels reagieren.

Ein weiteres Beispiel für ein härtbares Bindemittelsystem sind Systeme mit einem Bindemittel auf Basis von funktionellen Polyacrylat- oder Polyester/Melamin-Systemen. Die erfindungsgemäßen Additionsprodukte können bevorzugt durch ihre aminischen Gruppen mit funktionellen Gruppen des Bindemittels eine Reaktion eingehen.

Ein weiteres Beispiel für ein härtbares Bindemittelsystem sind Systeme mit einem Bindemittel auf Basis von Polyester/Carbonsäuren. Die erfindungsgemäß zum Einsatz kommenden Haftvermittler können bevorzugt durch ihre aminischen Gruppen mit den funktionellen Gruppen des Bindemittels reagieren.

Ein weiteres Beispiel für ein härtbares Bindemittelsystem sind strahlenhärtbare Systeme, welche beim Härtungsprozess radikalisch vernetzt werden. Diese Bindemittelsysteme enthalten Verbindungen mit ethylenisch-ungesättigten Gruppen, vorzugsweise (Meth)acrylatgruppen oder ungesättigte Polyestergruppen, und werden üblicherweise in Verbindung mit copolymerisierbaren (meth)acrylatfunktionellen Reaktivverdünnern eingesetzt. Die erfindungsgemäß zum Einsatz kommenden Haftvermittler können bevorzugt durch ihre aminischen Gruppen mit den (Meth)acrylat-Gruppen oder ungesättigte Polyestergruppen des Bindemittels und/oder des Reaktivverdünners reagieren.

Ein weiteres Beispiel für ein härtbares Bindemittelsystem sind Systeme mit einem Bindemittel auf Basis von Polyesteramiden oder Polyamidimiden, deren funktionelle Gruppen mit den erfindungsgemäß zum Einsatz kommenden Haftvermittlern, insbesondere deren aminischen Gruppen reagieren können.

Besonders bevorzugt können beim Einsatz der erfindungsgemäß zum Einsatz kommenden Haftungsvermittler eines der folgenden auszuhärtenden Bindemittelsysteme basierend auf

i. einem härtbaren Bindemittelsystem umfassend wenigstens eine, wenigstens zwei Epoxid-Endgruppen aufweisende Verbindung und wenigstens eine Härterkomponente,

ii. einem härtbaren Bindemittelsystem umfassend Alkoxysilan-, Acyloxysilan oder Silanol-Gruppen aufweisende Verbindungen,

iii. einem härtbaren Bindemittelsystem umfassend wenigstens difunktionelle, Carbonsäuregruppen aufweisende Polymere, vorzugsweise Polyester, und wenigstens eine Verbindung, die mindestens zwei Epoxygruppen oder mindestens zwei OH-Gruppen pro Molekül aufweist,

iv. einem härtbaren Bindemittelsystem umfassend wenigstens ein Polyacrylat- oder Polyester/Melamin basiertes Bindemittel,

v. einem strahlenhärtbaren Bindemittelsystem umfassend ein, wenigstens zwei ethylenisch ungesättigte Gruppen aufweisendes Polymeres, und ggf. mindestens einen mit diesen funktionellen Gruppen copolymerisierbaren Reaktiwerdünner, wobei es sich bei den ethylenisch-ungesättigten Gruppen des Polymeren bevorzugt um (Meth)acrylatgruppen, Vinylgruppen, Allylgruppen und/oder um ungesättigte Polyestergruppen handelt,

vi. einem härtbaren Bindemittelsystem umfassend wenigstens ein, wenigstens difunktionelles Polyesteramid und/oder Polyamidimid basiertes Bindemittel,

vii. einem härtbaren Bindemittelsystem umfassend wenigstens eine, mindestens difunktionelle Isocyanatverbindung, deren Isocyanatgruppen ggf. in geblockter Form vorliegen, und wenigstens eine, mindestens difunktionelle, isocyanatreaktive Komponente,

viii. einem härtbaren Bindemittelsystem umfassend wenigstens ein, wenigstens zwei Epoxid-Endgruppen aufweisendes Polymeres und ein Phenolharz
und/oder

ix. einem härtbaren Bindemittelsystem umfassend wenigstens ein Aminoharz, bevorzugt Melamin- oder Harnstoffharz,

eingesetzt werden.

Für jedes dieser Bindemittel kann die Mitverwendung eines Katalysators erforderlich sein. Die Härtung bzw. Trocknung der Bindemittelsysteme kann ggf. thermisch oder photochemisch durchgeführt werden. Ggf. sind auch Kombinationen dieser Bindemittel miteinander oder mit weiteren nach dem Stand der Technik bekannten Bindemitteln möglich.

Als härtbares Bindemittelsystem wird vorzugsweise ein System basierend auf einer Epoxid-Endgruppen aufweisenden Komponente eingesetzt, das besonders bevorzugt durch Umsetzung von Epichlorhydrin mit mehrwertigen Phenolen, ganz besonders bevorzugt durch Umsetzung mit Bisphenol A und/oder Bisphenol F zu einem Epoxidharz erhältlich ist, sowie auch Mischung dieser entsprechenden Epoxidharze.

Sofern bei der Aushärtung des Bindemittelsystems eine Härterkomponente mitverwendet wird, so sind als Härter Polyamine, Carbonsäureanhydride, Carbonsäuren, Polyphenole, Aminoharze, Phenolharze, katalytisch härtende Verbindungen (z.B. Ferrocene, Triarylsulfonium-Verbindungen), bevorzugt Polyamine oder Carbonsäureanhydride, wie sie z.B. in Stoye/Freitag, "Lackharze: Chemie, Eigenschaften und Anwendungen", Verlag Hanser Fachbuch, oder in DE 10 2005 046 641 A1, oder im Katalog "UPPC Lieferprogramm: Epoxidharzhärter, Epoxidharze, Glycidether" der Firma UPPC AG, 88487 Mietringen-Baltringen aufgeführt sind, geeignet. Die entsprechende Offenbarung wird hiermit als Offenbarung der vorliegenden Anmeldung eingeführt.

Beispiele für Aminogruppen aufweisende Härterkomponenten sind aliphatische, cycloaliphatische, araliphatische di- und/oder polyfunktionelle Amine. Hierzu zählen unter anderem primäre, aliphatische Polyamine, (z.B. Ethylendiamin, Diethylentriamin, Triethylentetramin, Tetraethylenpentamin, Pentaethylenhexamin und Homologe, 1,3-Pentandiamin, Propylendiamin, Hexamethylendiamin, Dipropylentriamin, Polyoxyethylenpolyamine, Polyoxypropylenpolyamine, Polytetrahydrofuranpolyamine, modifizierte aliphatische Amine (beispielsweise Mannich-Basen oder durch Reaktion von primären Aminen mit Glycidethern oder Carbonsäuren, bevorzugt Fettsäuren, hergestellte Produkte), hydroxylierte primäre Amine, cycloaliphatische Amine wie z.B. Isophorondiamin, Diaminocyclohexan, N-Aminoethylpiperazin, Tricyclodecantriamin, aromatische Polyamine wie z.B. Phenylendiamine, Methylendianilin, Diaminodiphenylmethan, Diaminodiphenylsulfon, oralyphatische Amine wie z.B. Xylylendiamin.

Beispielsweise können als Härter auch Carbonsäureanhydride wie Orthophthalsäureanhydrid, Hexahydrophthalsäureanhydrid, Methyltetrahydrophthalsäureanhydrid eingesetzt werden.

Eine Aushärtung von Epoxidharzen aufweisenden Bindemittelsystemen, kann optional auch in Kombination mit Isocyanatharzen, ggf. auch mit blockierten Isocyanaten erfolgen.

Typische Epoxid-Harze, Härter und Beschleuniger sowie deren Einsatzbedingungen ggf. im kombinierten Einsatz mit weiteren Zusatzstoffen werden in der einschlägigen Literatur beschrieben wie z.B. in Stoye/Freitag, "Lackharze: Chemie, Eigenschaften und Anwendungen", Verlag Hanser Fachbuch, oder in "Technische Information: Oberflächenschutz", Bände 1 und 2, herausgegeben von Witco GmbH, Bergkamen sowie der darin aufgelisteten Literatur. Die entsprechende Offenbarung wird hiermit als Referenz eingeführt und gilt als Teil der Offenbarung der vorliegenden Anmeldung.

Erfindungsgemäß können sowohl die vorstehend beschriebenen Beschichtungen als auch Lacke auf Basis der genannten Bindemittelsysteme vielfältig verwendet werden, u. a. auch zur Beschichtung bzw. Lackierung von Metallsubstraten, Kunststoff-, Glasoberflächen oder zu Überlackierung von existierenden Beschichtungen bzw. Lackierungen wie Altanstrichen.

Geeignete Substratoberflächen für Lackfilme sind z. B. eine ggf. vorbehandelte und/oder vorgereinigte und/oder passivierte Metalloberfläche, eine Metalllegierungs-Oberfläche, eine Kunststoff-Oberfläche, eine Glas-Oberfläche, eine Oberfläche eines Cellulosematerials, vorzugsweise eines Papiers, insbesondere eines unbehandelten oder vorbehandelten, getränkten, gebeizten oder imprägnierten Papiers, welches ggf. mit Fasern aus Glas, Kunststoff und/oder Kohlenstoff verstärkt ist, eine HolzOberfläche oder die Oberfläche eines bereits existierenden, ggf. gebrauchten oder verwitterten Anstriches.

Eine bevorzugte Gruppe von Substraten stellen Metalloberflächen dar. Bei Metalloberflächen geht eine Verbesserung der Lackhaftung oder Beschichtungshaftung auch oftmals mit einer Verbesserung der Korrosionsbeständigkeit des Materials einher, insbesondere bei einer ggf. vorbehandelten, metallischen Substratoberfläche aus Aluminium, Eisen, Kupfer, Zink, Zinn, Messing, Bronze, aus einer Aluminiumlegierung oder einer Eisenlegierung, vorzugsweise aus Stahl oder Edelstahl. Daher sind auch bevorzugte Substratoberflächen, die erfindungsgemäß mit einer gut haftenden Beschichtung ausgerüstet werden können, behandelte oder unbehandelte Metallsubstrate. Beispiele für solche Metalloberflächen sind Oberflächen aus Aluminium, Eisen, Kupfer, Zink, Zinn sowie Kombinationen hieraus. Jedes der genannten Metalle kann auch als Bestandteil einer Legierung vorliegen. Beispielsweise umfasst der Begriff "Aluminium" sowohl Aluminium als auch Aluminiumlegierungen, wobei als Aluminiumlegierung ein Metall angesehen wird, in dem Aluminium zu einem Gewichts-Anteil gegenwärtig ist, der zumindest so hoch wie der jedes anderen enthaltenen Elements ist. Legierungen des Eisens umfassen beispielsweise kaltgewalzten Stahl und heißgewalzten Stahl, elektrogalvanisierten Stahl, und feuerverzinkten Stahl. Es ist möglich, dass die Metalloberflächen zuvor einer Oberflächenbehandlung unterzogen wurden, beispielsweise einer Phosphatierung, Chromatierung oder Silanbehandlung. Weitere Beispiele für Metalloberflächen sind Oberflächen aus Messing oder Bronze.

Die vorliegende Erfindung betrifft aber auch die Verwendung der Additionsprodukte a) und/oder b) als haftungsverbessernde Zusätze zu Lacksystemen aufgebracht auf speziell schwierigen Substraten. Zum einen zählen hierzu bereits lackierte bzw. beschichtete Substrate. Diese umfassen insbesondere Oberflächen, die mit Hilfe eines nach dem Stand der Technik bekannten Lack, z.B. einem Epoxy-Lack, bereits beschichtet wurden, wobei es sich auch um Altanstriche handeln kann, die aufgrund von Verwitterungsprozessen gegenüber einer neu lackierten Oberfläche eine chemische Veränderung durchlaufen haben. Bevorzugt handelt es sich bei diesen gealterten, organischen Beschichtungen um solche auf Basis von z.B. gefüllten und/oder pigmentierten Alkyd- oder Acrylatharzen.

Zum anderen zählen auch Oberflächen aus Kunststoff zu schwierig zu beschichtenden Substratoberflächen. Diese Kunststoffe können ggf. gefüllte und/oder faserverstärkte Thermoplaste, Duromere, Elastomere wie z.B. Polyethylen (PE), Polypropylen (PP), Polyvinylchlorid (PVC), Polystyrol (PS), Polycarbonat (PC), Polymethylmethacrylat (PMMA), Acrylnitril-Butadien-Styrol-Copolymere (ABS), Polyamid (PA), Polyoxymethylen (POM), gesättigte Polyester (z.B. Polyethylenterephthalat und Polybutylenterephthalat), ungesättigte Polyester (UP), Epoxidharze (EP), Phenol-Formaldehyd-Harze, Melaminharze (MF), Phenolharze (PF), Polyurethanen (PUR), Ethylen-Propylen-Dien-Elastomeren (EPDM), sowie handelsüblichen Blends der genannten Kunststoffe sein.

Desweiteren betrifft die vorliegende Erfindung auch die Verwendung der Additionsprodukte a) und/oder b) als haftungsverbessernde Zusätze (Haftvermittler) zu Lacksystemen und/oder den genannten Kunststoff-Beschichtungsmaterialien, die auf Glasoberflächen unbehandelter oder vorbehandelter Art eingesetzt werden.

Zudem betrifft die vorliegende Erfindung auch die Verwendung der Additionsprodukte a) und/oder b) als haftungsverbessernde Zusätze zu Lacksystemen und/oder den genannten Kunststoff-Beschichtungsmaterialien auf Oberflächen aus Cellulosematerial wie auf Holzsubstraten oder holzartigen Substraten; unter holzartig werden auch Substratoberflächen verstanden, die Holz in verarbeiteter Form enthalten, beispielsweise Verbundstoffe auf Basis von Holz oder auch Papier. Dabei kann das Holzsubstrat oder holzartige Substrat (z. B. Papier), wie bereits erwähnt, in unbehandelter Form oder auch in vorbehandelter Form (z.B. getränkt, gebeizt, imprägniert) vorliegen.

Die Anwendung der Additionsprodukte a) und/oder b) als Haftvermittler kann (1) zunächst entweder durch Einbringung des Haftvermittler als Additiv in das Beschichtungsmaterial oder in das Lacksystem oder (2) durch Verwendung des Haftvermittlers als zumindest einer Komponente in einer Vorbehandlung, bei der der Haftvermittler oder eine den Haftvermittler enthaltende Zusammensetzung auf die Substratoberfläche vor dem Auftragen des Lacksystems oder des Beschichtungsmaterials aufgebracht wird, erfolgen. Letzteres ist z.B. bei einer Pulverlackierung möglich.

Darüber hinaus können die Beschichtungen als Schicht- oder Lackfilm, wenn notwendig, übliche Hilfsstoffe als Verarbeitungsadditive wie Antischaummittel, Entlüfter, Inhibitoren, Stabilisatoren wie Antioxidantien, Lichtschutzmittel, Wärmestabilisatoren und Flammschutzmittel, Modifikatoren wie Benetzungsmittel, Weichmacher, Verdicker, Thixotropiermittel, Schlagzähmacher, Blähmittel und/oder Oberflächenmodifikatoren wie Antistatika, Hydrophobierungsmittel, Hydrophilierungsmittel, Wachse, organische und/oder anorganische Pigmente und Füllstoffe, vorzugsweise aus Materialien, die unterschiedlich von zu beschichteten Substratmaterialien sind, Netz- und Dispergiermittel enthalten. Die Auswahl der entsprechenden Additive erfolgt in bekannter Weise nach dem endgültigen Einsatzzweck, der dekorativ und/oder technisch sein kann. Weiterhin können die Beschichtungen auch bedruckt und/oder geprägt sein.Weiterhin offenbart ist ein Verfahren zur Herstellung eines Überzuges bzw. einer Beschichtung auf einer der genannten Substratoberflächen, gemäß dem wenigstens ein vorstehend beschriebenes Lacksystem oder Beschichtungsmaterial enthaltend einen Haftvermittler a) und/oder b) und ggf. übliche Hilfsstoffe auf eine Substratoberfläche aufgebracht und das auf die Substratoberfläche aufgebrachte Lacksystem oder die Beschichtung entweder physikalisch getrocknet, eingebrannt und/oder ausgehärtet bzw. vernetzt wird.

Ein alternatives Verfahren zur Herstellung eines Überzuges bzw. einer Beschichtung auf einer der genannten Substratoberflächen besteht darin, dass wenigstens ein vorstehend beschriebenes Lacksystem oder Beschichtungsmaterial auf eine Substratoberfläche, die bereits mit einem Voranstrich enthaltend wenigstens ein Additionsprodukt a) und/oder b) versehen wurde, aufgebracht und das aufgebrachte Lacksystem oder das Beschichtungsmaterial entweder physikalisch getrocknet, eingebrannt und/oder ausgehärtet bzw. vernetzt wird. Der vor der Herstellung des eigentlichen Lackfilmes aufgebrachte Voranstrich kann auf wenigstens einem der genannten Haftvermittler und ggf. weiteren Komponenten wie z.B. Benetzungshilfsmittel oder Verlaufsmittel basieren.

Ein weiterer Aspekt der vorliegenden Erfindung ist ein Gegenstand oder ein Artikel, dessen Metalloberfläche, vorzugsweise aus Aluminium, Eisen, Kupfer, Zink, Zinn oder einer Metalllegierung, vorzugsweise aus einer Aluminium- oder Eisen-Legierung, Messing oder Bronze, oder dessen Kunststoff- oder Glas-Oberfläche oder dessen Oberfläche aus Cellulosematerial mit wenigstens einer der vorstehend beschriebenen Beschichtungen hergestellt unter Verwendung wenigstens eines Additierungsproduktes a) und/oder b) als Haftvermittler versehen ist.

Ebenso ist ein Gegenstand oder ein Artikel, dessen schichtförmige oder filmförmige Beschichtung hergestellt unter Verwendung wenigstens eines der vorstehend beschriebenen Additionsprodukte a) und/oder b) als Haftvermittler auf einem synthetischen, halbsynthetischen und/oder natürlichen Polymeren basiert, ein Gegenstand der Erfindung.

Weiterhin ist ein Aspekt der vorliegenden Erfindung ein Gegenstand oder ein Artikel dessen Beschichtung in Form eines Lackfilms, hergestellt unter Verwendung wenigstens eines der vorstehend beschriebenen Additionsprodukte a) und/oder b) in einer Menge von weniger als 5 Gew.%, bezogen auf das Gesamtgewicht der Beschichtung, als Haftvermittler, auf wenigstens einem der genannten aushärtbaren Bindemittelsysteme basiert.

**Beispiele:**

In den Beispielen werden folgende Verbindungen eingesetzt:

| ***Name*** | ***Beschreibung der Verbindung*** |
|---|---|
| Diacrylat A | ethoxyliertes Bisphenol A-Diacrylat, durchschnittlich 4 Einheiten Ethylenoxid pro Molekül |
| Diacrylat B | Desmolux WDJ 4529, ein lineares ungesättigtes aliphatisches Urethanacrylat, reaktivverdünnerfrei; Firma Bayer MaterialScience |
| Diacrylat C | Polyethylenglycol-200-Diacrylat |
| Monoacrylat D | OH-terminales Polyester-Monoacrylat (Polyester auf Basis von 2 Einheiten $\varepsilon$-Caprolacton) |

**I Herstellung der Haftvermittler**

Die Herstellung der Haftvermittler kann ggf. in einem organischen Lösungsmittel erfolgen. In den folgenden Angaben steht die Abkürzung NMR für kernmagnetische Resonanzspektroskopie.

*Haftvermittler 1:*

34,60 g Hexandioldiacrylat und 120,00 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 10 min werden 24,90 g 3-Aminopropyltrimethoxysilan zugetropft und durch Kühlung sichergestellt, dass die Temperatur der Reaktionsgemisches 40°C nicht überschreitet. Man rührt noch 4 h bei 30°C. Anschließend werden 20,50 g Triethylentetramin innerhalb von 8 min zugetropft. Man rührt noch 6 h bei 30°C. Produkt: die Acrylat-Gruppen wurden vollständig umgesetzt (bestimmt über $^1H$-NMR-Spektroskopie). Die Wirksubstanz fällt als 40%-ige Lösung in 1-Methoxy-2-propylacetat an.

*Haftvermittler 2:*

33,50 g Dipropylenglycoldiacrylat und 120,00 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 10 min werden 22,50 g 3-Aminopropyltrimethoxysilan zugetropft und durch Kühlung sichergestellt, dass die Temperatur der Reaktionsgemisches 40°C nicht überschreitet. Man rührt noch 5 h bei 30°C. Anschließend werden 24,0 g Tetraethylenpentamin innerhalb von 8 min zugetropft. Man rührt noch 6 h bei 30°C. Produkt: die Acrylat-Gruppen wurden vollständig umgesetzt (bestimmt über $^1H$-NMR-Spektroskopie). Die Wirksubstanz fällt als 40%-ige Lösung in 1-Methoxy-2-propylacetat an.

*Haftvermittler 3:*

47,10 g Diacrylat A und 120,00 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 10 min werden 15,90 g 3-Aminopropyltrimethoxysilan zugetropft und durch Kühlung sichergestellt, dass die Temperatur der Reaktionsgemisches 40°C nicht überschreitet. Man rührt noch 4 h bei 30°C. Anschließend werden 17,00 g Tetraethylenpentamin innerhalb von 8 min zugetropft. Man rührt noch 6 h bei 30°C. Produkt: die Acrylat-Gruppen wurden vollständig umgesetzt (bestimmt über $^1$H-NMR-Spektroskopie). Die Wirksubstanz fällt als 40%-ige Lösung in 1-Methoxy-2-propylacetat an.

*Haftvermittler 4:*

54,3 g Tripropylenglycoldiacrylat und 120,00 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 10 min werden 14,60 g 3-Aminopropyltrimethoxysilan zugetropft und durch Kühlung sichergestellt, dass die Temperatur der Reaktionsgemisches 40°C nicht überschreitet. Man rührt noch 4 h bei 30°C. Anschließend werden 11,10 g 1,3-Xylylendiamin innerhalb von 8 min zugetropft. Man rührt noch 6 h bei 30°C.

Produkt: die Acrylat-Gruppen wurden vollständig umgesetzt (bestimmt über $^1$H-NMR-Spektroskopie). Die Wirksubstanz fällt als 40%-ige Lösung in 1-Methoxy-2-propylacetat an.

*Haftvermittler 5:*

48,10 g Diacrylat C und 120,00 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 10 min werden 22,80 g Bis[3-(trimethoxysilyl)propyl]amin zugetropft und durch Kühlung sichergestellt, dass die Temperatur der Reaktionsgemisches 40°C nicht überschreitet. Man rührt noch 5 h bei 30°C. Anschließend werden 9,10 g 1,3-Xylylendiamin innerhalb von 8 min zugetropft. Man rührt noch 6 h bei 30°C. Produkt: die Acrylat-Gruppen wurden vollständig umgesetzt (bestimmt über $^1$H-NMR-Spektroskopie). Die Wirksubstanz fällt als 40%-ige Lösung in 1-Methoxy-2-propylacetat an.

*Haftvermittler 6:*

22,50 g Diacrylat C und 64,40 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 7 min werden 11,20 g 3-Aminopropyltrimethoxysilan zugetropft und durch Kühlung sichergestellt, dass die Temperatur der Reaktionsgemisches 40°C nicht überschreitet. Man rührt noch 4 h bei 30°C. Anschließend werden 9,2 g Triethylentetramin innerhalb von 2 min zugetropft. Man rührt noch 6 h bei 30°C. Produkt: die Acrylat-Gruppen wurden vollständig umgesetzt (bestimmt über $^1$H-NMR-Spektroskopie). Die Wirksubstanz fällt als 40%-ige Lösung in 1-Methoxy-2-propylacetat an.

*Haftvermittler 7:*

22,50 g Diacrylat C und 60,20 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt.

Innerhalb von 8 min werden 11,20 g 3-Aminopropyltrimethoxysilan zugetropft und durch Kühlung sichergestellt, dass die Temperatur der Reaktionsgemisches 40°C nicht überschreitet. Man rührt noch 4 h bei 30°C. Anschließend werden 6,45 g Diethylentriamin innerhalb von 2 min zugetropft. Man rührt noch 6 h bei 30°C. Produkt: die Acrylat-Gruppen wurden vollständig umgesetzt (bestimmt über $^1$H-NMR-Spektroskopie). Die Wirksubstanz fällt als 40%-ige Lösung in 1-Methoxy-2-propylacetat an.

*Haftvermittler 8:*

40,00 g Dipropylenglycoldiacrylat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 15 min werden 29,23 g 3-Aminopropyltriethoxysilan zugetropft und durch Kühlung sichergestellt, dass die Temperatur der Reaktionsgemisches 40°C nicht überschreitet. Man rührt noch 1 h bei 35°C. Anschließend

werden 28,15 g Isophorondiamin innerhalb von 10 min zugetropft. Man rührt noch 5 h bei 30°C. Produkt: die Acrylat-Gruppen wurden vollständig umgesetzt (bestimmt über $^{1}$H-NMR-Spektroskopie).

*Haftvermittler 9:*

50,00 g Diacrylat B werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 12 min werden 14,03 g 3-Aminopropyltriethoxysilan zugetropft und durch Kühlung sichergestellt, dass die Temperatur der Reaktionsgemisches 40°C nicht überschreitet. Man rührt noch 1 h bei 35°C. Anschließend werden 13,49 g Isophorondiamin innerhalb von 6 min zugetropft. Man rührt 1 h bei 30°C, wobei die Viskosität ansteigt. Hiernach wird mit 19,38 g 1-Methoxy-2-propylacetat verdünnt, um die Viskosität des Reaktionsgemisches zu reduzieren, wobei die Wirksubstanz als 80%-ige Lösung in 1-Methoxy-2-propylacetat vorliegt. Man rührt noch 5 h bei 30°C. Produkt: die Acrylat-Gruppen wurden vollständig umgesetzt (bestimmt über $^{1}$H-NMR-Spektroskopie).

*Haftvermittler 10:*

210,00 g Diacrylat C und 652,47 g 1-Methoxy-2-propylacetat werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 20 min werden 114,60 g 3-Aminopropyltriethoxysilan zugetropft und durch Kühlung sichergestellt, dass die Temperatur der Reaktionsgemisches 40°C nicht überschreitet. Man rührt noch 4 h bei 35°C. Anschließend werden 110,38 g Isophorondiamin innerhalb von 15 min zugetropft. Man rührt noch 5 h bei 30°C. Produkt: die Acrylat-Gruppen wurden vollständig umgesetzt (bestimmt über $^{1}$H-NMR-Spektroskopie). Die Wirksubstanz fällt als 40%-ige Lösung in 1-Methoxy-2-propylacetat an.

*Haftvermittler 11:*

75,00 g des Monoacrylats D und 1,17 g Dibutylzinndilaurat-Lösung (1 % in Xylol) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Das Reaktionsgemisch wird auf 80°C erwärmt. Innerhalb von 7 min werden 27,90 g 3-Isocyanatopropyltrimethoxysilan zugetropft, wobei die Temperatur auf 100°C ansteigt. Durch Kühlung wird die Temperatur wieder auf 80°C gesenkt. Man rührt noch 2,5 h bei 80°C weiter. Zwischenprodukt: Die Isocyanat-Gruppen wurden vollständig umgesetzt, Hydroxy-Endgruppen sind nicht mehr nachweisbar (bestimmt über $^{13}$C-NMR-Spektroskopie); das Verhältnis von Acrylat-Doppelbindungen zu Silan-Gruppen beträgt 1,05 zu 1 (bestimmt über $^{1}$H-NMR-Spektroskopie; Theorie: 1:1).

Das Reaktionsgemisch wird auf 30°C abgekühlt und mit 14,02 g Diethylentriamin versetzt. Man rührt noch 6 h, wobei die Temperatur 35°C nicht übersteigt. Die Acrylat-Gruppen wurden vollständig umgesetzt (bestimmt über $^{1}$H-NMR-Spektroskopie).

*Haftvermittler 12:*

40,00 g Diacrylat C werden in einem Rundkolben mit Rückflusskühler, Gaseinlass, Temperaturfühler, Tropftrichter und KPG-Rührer vorgelegt und auf 30°C erhitzt. Die Reaktion wird unter Stickstoff-Strom durchgeführt. Innerhalb von 20 min werden 24,90 g 3-Aminopropyltriethoxysilan zugetropft und durch Kühlung sichergestellt, dass die Temperatur der Reaktionsgemisches 40°C nicht überschreitet. Man rührt noch 6 h bei 30°C. Produkt: die Acrylat-Gruppen wurden vollständig umgesetzt (bestimmt über $^{1}$H-NMR-Spektroskopie).

*Haftvermittler 13:*

227,40 g 1-Methoxy-2-propylacetat und 79,60 g 3-Aminopropyltrimethoxysilan werden in einem Rundkolben mit Rückflusskühler, Gaseinlass, Temperaturfühler, Tropftrichter und KPG-Rührer bei 25°C vorgelegt. Die Reaktion wird unter Stickstoff-Strom durchgeführt. Innerhalb von 35 min werden 72,00 g Diacrylat C zugetropft und durch Kühlung sichergestellt, dass die Temperatur der Reaktionsgemisches 40°C nicht überschreitet. Man rührt noch 6 h bei 25°C. Produkt: die Acrylat-Gruppen wurden vollständig umgesetzt (bestimmt über $^{1}$H-NMR-Spektroskopie). Die Wirksubstanz fällt als 40%-ige Lösung in 1-Methoxy-2-propylacetat an.

**II Anwendung der Haftvermittler**

Folgende kommerziell verfügbare Rohstoffe kommen in den anwendungstechnischen Beispielen zum Einsatz:

| ***Name*** | ***Beschreibung des Rohstoffs*** |
|---|---|
| Aerosil R 972 | hydrophobe, pyrogene Kieselsäure, nachbehandelt mit Dimethyldichlorsilan; Firma Evonik, Essen |
| Bayferrox 130M | Rotpigment, mikronisiert; synthetisches Eisenoxid alpha-$Fe_2O_3$; Firma Lanxess, Leverkusen |
| Blanc fixe micro | synthetisches Bariumsulfat, das aus hochreinen Lösungen in einem definierten Wachstumsprozess entsteht, organisch beschichtet; Firma Sachtleben Chemie GmbH |
| Blanc fixe N | synthetisches Bariumsulfat, das aus hochreinen Lösungen in einem definiertem Wachstumsprozess entsteht; Firma Sachtleben Chemie GmbH |
| BYK-057 | Silikonfreier Entschäumer zur Verhinderung der Schaumbildung bei der Herstellung, Abfüllung und Verarbeitung lösemittelhaltiger und lösemittelfreie Lacksysteme; Lösung schaumzerstörender Polymere, silikonfrei; Firma BYK-Chemie GmbH, Wesel |
| BYK-320 | Silikonverlaufsadditiv mit entschäumenden Eigenschaften; Lösung eines polyethermodifizierten Polymethylalkylsiloxans; Firma BYK-Chemie GmbH, Wesel |
| BYK-358 N | Acrylatadditiv zur Verbesserung des Verlaufes und Erhöhung des Glanzes; Lösung eines Acrylat-Copolymers; Firma BYK-Chemie GmbH, Wesel |
| BYK-A 530 | Entlüfter und Entschäumer für lösemittelhaltige und lösemittelfreie Beschichtungen; Lösung schaumzerstörender Polymere, silikonhaltig; Firma BYK-Chemie GmbH, Wesel |
| Cymel 303 | Hexamethoxymethylmelamin, geliefert in flüssiger Form (> 98% nichtflüchtige Anteile), Firma Cytek |
| Disperbyk-110 | Netz- und Dispergieradditiv für lösemittelhaltige Lacksysteme; Lösung eines Copolymeren mit sauren Gruppen; Firma BYK-Chemie GmbH, Wesel |
| Dynapol Katalysator 1203 | nichtionogenblockierter Säurekatalysator zur Beschleunigung der Vernetzung von Einbrennlacken (50%-ig in Xylol), Firma Evonik, Essen |
| Dynapol LH 820 | Polyesterharz der Firma Evonik, Essen |
| Dynapol LH 830-02 (60%) | Polyesterharz der Firma Evonik, Essen (Harz ist 60%-ig angelöst in Solvesso 150/Butylglycol) |
| Epikote 828 | mittelviskoses flüssiges Epoxyharz hergestellt aus Bisphenol A und Epichlorhydrin; Firma Hexion Specialty Chemicals |
| Epikure 3155 | niedrigviskoser, modifizierter Polyamid-Epoxy-Härter basierend auf dimerisierter Fettsäure und Polyaminen; Firma Hexion Specialty Chemicals |
| Irgacure 500 | Photoinitiator der Firma Ciba (flüssige Mischung von 50% 1-Hydroxycyclohexylphenylketon and 50 % Benzophenon) |
| Laromer PE 56 E | Polyester-Acrylat der Firma BASF, Ludwigshafen |
| Micro Talc AT1 | Talk-Magnesit-Type der Firma Mondo Minerals |
| Solvesso 150 ND | aromatenhaltiges Mineralöl, Firma Imperial Oil Limited |
| Titandioxid R960 | Rutil-Titandioxid-Pigment, hergestellt nach dem Chlorid-Prozess; Firma DuPont |

**A) Anwendung in Epoxy-Korrosionsschutzlacken**

a) Substratvorbereitung

Als Substrat wurde ein Stahlblech der Firma Q-Panel, Typ QD-36 "Steel smooth finish", Abmessungen (Höhe / Breite / Dicke): 152 mm x 76 mm x 0,5 mm verwendet.

Die Stahlbleche, die zur Prüfung verwendet wurden, wurden 5 min in einer Mucasol-Emulsion (2 Gew.%-ige Lösung von Mucasol Schnellreiniger in Wasser, Firma Brand GmbH & Co. KG, 97861 Wertheim/Main) unter Einwirkung eines Ultraschallbades, Typ Branson 1200 Ultrasonic Cleaner, Model B1200E-1 (Branson Ultrasonics Corporation, 41 Eagle Rd., Danbury, CT 06813-1961, USA) behandelt. Im Anschluss wurden die Bleche mit VE-Wasser abgespült und

anschließend mit Ethylacetat gereinigt. Die Applikation des Lacksystems auf dem jeweiligen Blech wurde spätestens 2 h nach der Reinigung durchgeführt.

b) Herstellung der getesteten Lacksysteme

Als Lacksystem wurde jeweils ein lösemittelfreies Epoxy-System der folgenden Zusammensetzung eingesetzt:

| | ***Rohstoff*** | ***Menge (g)*** |
|---|---|---|
| Komponente A | Epikote 828 | 34.5 |
| | BYK-A530 | 0.4 |
| | BYK-320 | 0.3 |
| | Blanc fixe N | 21.7 |
| | Micro Talc AT1 | 14.7 |
| | Bayferrox 130M | 5.3 |
| | Benzylalkohol | 23.1 |
| | Total | 100.0 |
| Härterkomponente B | Epikure 3155 | 24.7 |

Zur Herstellung des Lacksystems wurden alle Bestandteile der Komponente A vermischt und 15 min unter Einwirkung eines Dissolvers Typ Dispermat MG-E7 der Firma VMA-Getzmann GmbH, 51580 Reichshof bei 5000 U/min in einem Kunststoffbecher aus Polyethylen homogenisiert. Hiernach wurde in einen neuen Kunststoffbecher umgefüllt und abermals 5 min unter Einwirkung des Dissolvers homogenisiert. Anschließend wurde in eine verschließbare Metalldose umgefüllt.

In allen Vergleichsbeispielen (2 und 3) bzw. in allen erfindungsgemäßen Beispielen 1 - 5 wurde der Haftvermittler mit einer Dosierung von 1,0 Gew.% Wirksubstanz (bezogen auf das Gesamtgewicht der Komponente A) eingesetzt. Dazu wurde der Haftvermittler mit dem verwendeten Härter (Komponente B) gemischt und sofort im Anschluss mit der Komponente A gemischt und mit einem Dissolver Typ Dispermat LC3 der Firma VMA-Getzmann GmbH, 51580 Reichshof bei 2000 U/min für 3 min lang homogenisiert. Danach wurde das Lacksystem 5 min stehen gelassen und dann über ein 80 $\mu$-Sieb abfiltriert. Das Lacksystem wurde umgehend mit Hilfe einer 175 $\mu$m Spiralrakel auf das gereinigte Prüfblech aufgetragen.

Die Bleche wurden 16 Stunden bei Raumtemperatur und anschließend 8 Stunden bei 45°C getrocknet.

Nach der Trocknung wurde die Trockenfilmdicke mittels eines Handprüfgeräts Typ byko-test 1500, Firma BYK-Gardner, 82538 Geretsried, bestimmt.

c) Salzsprühtest:

Zur Durchführung des Salzsprühtests wurde mit einer Ritzstichel nach Sikkens, Modell 463 der Firma Erichsen, 58675 Hemer (Klingenbreite: 1 mm) ein Ritz (1) von 1 mm Breite vertikal in die Mitte des Blechs (2), das mit Klebestreifen (3) befestigt ist, gemäß Figur 1 gemacht.

Der Salzsprühtest wurde jeweils 168 Stunden (1 Woche) lang gemäß DIN EN ISO 9227 durchgeführt.

Zur Auswertung des Salzsprühtests bzw. der Schutzwirkung des aufgebrachten Lackes wurde die Unterwanderung nach 168 Stunden wie folgt bestimmt:

Die Unterwanderung wird anhand des $W_d$-Wertes gemäß der folgenden Formel berechnet:

$$W_d\ (\text{mm}) = \frac{\text{durchschnittliche Unterwanderung (mm) an 6 verschiedenen Stellen - 1}}{2}$$

Ergebnisse des Salzsprühtests nach 7 Tagen:

| *Haftvermittler* | *Trockenschichtdicke [$\mu$m]* | *$W_d$ [mm]* | *Beispiel-Nr.* |
|---|---|---|---|
| ---- | 87,0 | 72,5 | Vergleich 1 |

(fortgesetzt)

| *Haftvermittler* | *Trockenschichtdicke [μm]* | *$W_d$ [mm]* | *Beispiel-Nr.* |
|---|---|---|---|
| Trimethoxy(3-glycidoxypropyl)silan | 86,0 | 18,0 | Vergleich 2 |
| N-(3-(Trimethoxysilyl)propyl)-ethylendiamin | 84,0 | 24,0 | Vergleich 3 |
| Haftvermittler 1 | 87,0 | 10,5 | Beispiel 1 |
| Haftvermittler 2 | 86,0 | 9,5 | Beispiel 2 |
| Haftvermittler 3 | 84,0 | 8,0 | Beispiel 3 |
| Haftvermittler 4 | 86,0 | 9,7 | Beispiel 4 |
| Haftvermittler 5 | 88,0 | 6,2 | Beispiel 5 |

Die vorgestehenden Ergebnisse des Salzsprühtests belegen signifikant reduziert $W_d$-Werte beim Einsatz der erfindungsgemäßen Haftvermittler und damit eine deutlich verbesserte Lackhaftung bei verminderter Korrosion.

**B) Anwendung in einem Polyester-Einbrennlack**

a) Substrat

Als Substrat wurde ein elektrolytisch verzinkter Stahl, Probenbleche der Firma Krüppel, 47807 Krefeld, Typ "Zinkor DC01 +ZE (25/25)"; Abmessungen (Höhe / Breite / Dicke): 150 mm x 80 mm x 0,8 mm eingesetzt.

b) Lacksystem: Polyester/Melamin-System

Auf das Prüfblech wurde ein Zweischichtenlack bestehend aus Primer-Lack, der direkt auf die Metalloberfläche appliziert wurde, und ein Topcoat-Lack jeweils aufgetragen. Der Haftvermittler wurde nur dem Primer-Lack zugesetzt.

Dazu wurde jeweils eine Dosierung von 1 Gew.% der Wirksubstanz (bezogen auf die Gesamtmasse des Primer-Lacks) gewählt.

Beide Lacksysteme wurden jeweils zunächst von Hand mittels eines Spatels gerührt und dann mit Hilfe eines Dissolvers (Pendraulik Typ TD100, Firma Pendraulik, Springe, 3 min bei 1865 U/min) homogenisiert.

Zusammensetzung des Primer-Lacksystems (Polyester-Melamin-Lacksystem):

| ***Mahlgut*** | ***Anteil in Gew.%*** |
|---|---|
| Dynapol LH 820 | 32.3 |
| Aerosil R 972 | 0.6 |
| Blanc fixe micro | 9.1 |
| Titandioxid R960 | 9.1 |
| ***Auflackgut*** | |
| Dynapol LH 820 | 21.5 |
| BYK-358 N | 1.1 |
| BYK-057 | 0.6 |
| Cymel 303 | 7.5 |
| 1-Methoxy-2-propylacetat | 11.3 |
| Dynapol Catalyst BL 1203 | 3.8 |
| ***Einstellung der Viskosität*** | |
| 1-Methoxy-2-propylacetat | 3.1 |
| | **100.0** |

*Anreibebedingungen:*

20 min bei 40°C und 8.000 U/min (Dissolver: Pendraulik Typ TD100, Firma Pendraulik, Springe), Gewichtsverhältnis Glasperlen : Mahlgut = 1:1 (Glasperlen: Sil-glass slg/10-12, Firma Siltrade, Rietschen)

Zusammensetzung des Topcoat-Lacksystems (Polyester-Melamin-Lacksystem):

| ***Mahlgut*** | ***Anteil in Gew.%*** |
|---|---|
| Dynapol LH 830 (60%) | 33.0 |
| 1-Methoxy-2-propylacetat | 5.0 |
| Disperbyk-110 | 1.2 |
| Aerosil R 972 | 0.3 |
| Titandioxid R 960 | 30.0 |
| ***Auflackgut*** | |
| Dynapol LH 830 (60%) | 17.0 |
| Cymel 303 | 7.5 |
| Dynapol Catalyst BL 1203 | 3.8 |
| BYK-057 | 0.2 |
| BYK-358N | 0.5 |
| Solvesso 150 ND | 1.5 |
| | **100.0** |

*Anreibebedingungen:*

20 min bei 40°C und 8.000 U/min (Dissolver: Pendraulik Typ TD100, Firma Pendraulik, Springe), Gewichtsverhältnis Glasperlen : Mahlgut = 1:1 (Glasperlen: Sil-glass slg/10-12, Firma Siltrade, Rietschen)
Primerlacksystem bzw. Topcoat-Lacksystem wurden jeweils 16 Stunden bei Raumtemperatur gelagert und dann unter folgenden Bedinungen auflackiert:

*Primerlacksystem:*

Spiralrakel: 30 μm Nassfilmdicke
Trockenfilmdicke: 5 μm (bestimmt mit einem Schichtdickenmessgerät Typ QuaNix 7500 der Firma Automation Dr. Nix, Köln)

*Topcoatlacksystem:*

Spiralrakel: 80 μm Nassfilmdicke
Trockenfilmdicke: 20 μm (bestimmt mit einem Schichtdickenmessgerät Typ QuaNix 7500 der Firma Automation Dr. Nix, Köln)

*Einbrennbedingungen:*

Beide Lackfilme wurden jeweils 30 Sekunden lang bei einer Temperatur von 420 °C eingebrannt. Für beide Schichten betrug die Peak Metal Temperature (PMT) 232°C.

*Salzsprühtest:*

Die lackierten Prüfbleche wurden einem 500-stündigen Salzsprühtest nach DIN EN ISO 9227 unterzogen.
Hierzu wurden auf den lackierten Blechen zunächst eine 1 mm breite und 100 mm lange Kratzspur mit einer Ritzstichel nach Sikkens, Modell 463 der Firma Erichsen, 58675 Hemer (Klingenbreite: 1 mm) eingeritzt; es wurde darauf

geachtet, dass diese Kratzspur bis auf den Stahl (also durch die Verzinkungsschicht hindurch) angebracht wird. Nach Lagerung in der Salzsprühkammer wurde das Ausmaß der Unterwanderung nach Kratzen mit einem Messer auf der Oberfläche begutachtet. Die Berechnung des $W_d$-Wertes zur Feststellung der Schutzwirkung des 2-schichtigen Lackes erfolgte gemäß der vorstehend angegebenen Formel.

| *Haftvermittler* | *$W_d$ [mm]* | *Beispiel-Nr.* |
|---|---|---|
| ---- | 5,7 | Vergleich 4 |
| N-(3-(Trimethoxysilyl)propyl)-ethylendiamin | 4,3 | Vergleich 5 |
| Haftvermittler 13 | 4,0 | Vergleich 6 |
| Haftvermittler 6 | 2,4 | Beispiel 6 |
| Haftvermittler 7 | 1,6 | Beispiel 7 |

Die Ergebnisse belegen die verbesserte Haftvermittlerwirkung durch Einsatz der erfindungsgemäßen Haftvermittler.

**<u>C) Anwendung in einem Holzlack</u>**

a) Substrat

Als Substrat wurde die Oberfläche einer Teakholzplatte (massiv, Abmessung: 15,5 cm x 7,0 cm x 0,8 cm), angeschliffen mit Schleifmittelbogen Typ Wetordry P220 der Firma 3M eingesetzt.

b) Lacksystem: Polyester-Acrylat

| *Rohstoff* | *Gewichtsanteil in %* |
|---|---|
| Laromer PE 56 F | 72,65 |
| Dipropylenglycoldiacrylat | 23,50 |
| Irgacure 500 | 3,85 |

Die vorstehend aufgeführten Komponenten des Lacksystems wurden mit Hilfe eines Dissolvers (Typ Pendraulik LM34, Firma Pendraulik, Springe) 3 min lang bei 1865 U/min homogenisiert. Sofern ein Haftvermittler eingesetzt wurde, wurde er in einer Dosierung von 2 Gew.% Wirksubstanz (bezogen auf die Gesamtmasse der Lackformulierung) eingesetzt.

Die Lacksysteme wurden über Nacht gelagert und anschließend mit einer 25 μm-Spiralrakel auf die angeschliffene Teakholzoberfläche appliziert.

Es wurde eine zweischichtige Lackierung durchgeführt, wobei dasselbe Lacksystem zweimal appliziert wurde. Der Haftvermittler wurde nur im PrimerLacksystem eingesetzt. Der Decklack enthielt nicht den Haftvermittler.

Nach Auftrag des Primer-Lackfilmes wurde eine UV-Aushärtung auf einer Anlage Typ M-35-2x1-TR-SS der Firma IST METZ unter Verwendung von UV-Lampen des Typs M350 U1 // M350 U1A (Quecksilber- bzw. Galliumlampe, UV-Bereich: 180-450 nm) mit 120 W/cm und 20 m/min Laufgeschwindigkeit durchgeführt (Angelierung).

Nach Auftrag des Deck-Lackfilmes wurde eine UV-Aushärtung auf einer Anlage Typ M-35-2x1-TR-SS der Firma IST METZ unter Verwendung von UV-Lampen des Typs M350 U1 // M350 U1A (Quecksilber- bzw. Galliumlampe, UV-Bereich: 180-450 nm) mit 120 W/cm und 5 m/min Laufgeschwindigkeit durchgeführt.

c) Messung der Lackhaftung

Die Lackhaftung auf der Holzoberfläche wurde nach 2 Methoden bewertet:

c1) Münztest

Mit einer 2-Euro-Münze wurde ein Kratztest auf dem Lack durchgeführt. Dabei wurde festgestellt, in welchem Ausmaß sich der Lack durch das Kratzen vom Untergrund ablöst. Die Bewertung geschah visuell anhand von Schulnoten (1 = sehr gute Haftung, 5 = gar keine Haftung).

c2)Gitterschnitt-Test

Unter Verwendung eines Klapplineals wurden mit einem Cuttermesser (NT Cutter, Modell eA-300, Firma NT Incorporated, Osaka, Japan) zwei zueinander rechtwinklig nach einander angebrachte Kratzspuren mit jeweils 5 Kratzlinien (gemäß Fig. 2) auf dem Lack angebracht. Im Anschluss wurde ein 180°-Abzugstest mit handelsüblichem Tesa-Film (Firma Tesa SE) durchgeführt. Die Bewertung geschah visuell anhand von Schulnoten (1 = sehr gute Haftung, 5 = gar keine Haftung).

| *Haftvermittler* | *Bewertung Münztest* | *Bewertung Gitterschnitt-Test* | *Beispiel-Nr.* |
|---|---|---|---|
| ---- | 5 | 5 | Vergleich 7 |
| 3-Aminopropyltriethoxysilan | 4 | 5 | Vergleich 8 |
| Haftvermittler 12 | 5 | 5 | Vergleich 9 |
| Haftvermittler 8 | 2 | 2-3 | Beispiel 8 |
| Haftvermittler 9 | 2-3 | 2 | Beispiel 9 |

**Patentansprüche**

1. Eine Verwendung von

   a.) wenigstens einem ggf. oligomeren, keine endständigen C=C-Doppelbindungen aufweisenden Additionsprodukt
   von wenigstens einem mindestens eine hydrolysierbare Silangruppe aufweisenden Aminosilan und/oder Thiosilan
   und mindestens einem weiteren Monoamin und/oder Polyamin mit mindestens 2 Aminogruppen, wobei das Monoamin und/oder Polyamin keine hydrolisierbare Silangruppe enthält und mindestens eine primäre oder sekundäre Aminogruppe aufweist,
   an mindestens eine wenigstens zwei endständige, ethylenisch ungesättigte Doppelbindungen aufweisende Verbindung;
   und/oder von
   b.) wenigstens einem ggf. oligomeren, keine endständigen C=C-Doppelbindungen aufweisenden Additionsprodukt
   von wenigstens einem mindestens eine hydrolysierbare Silangruppe aufweisendes Isocyanatsilan und/oder Epoxysilan
   an mindestens eine wenigstens eine endständige Hydroxygruppe und wenigstens eine endständige, ethylenisch ungesättigte Doppelbindung aufweisende Verbindung in Kombination mit wenigstens einem Monoamin und/oder Polyamin mit mindestens 2 Aminogruppen, wobei das Monoamin und/oder Polyamin keine hydrolisierbare Silangruppe enthält und mindestens eine primäre oder sekundäre Aminogruppe aufweist, als Haftvermittler zwischen einer Beschichtung basierend auf wenigstens einem synthetischen, halbsynthetischen und/oder natürlichen Polymeren und einer damit beschichteten Substratoberfläche in einer Menge von weniger als 5 Gew.%, bezogen auf das Gesamtgewicht der Beschichtung.

2. Eine Verwendung nach Anspruch 1, **dadurch gekennzeichnet, dass** die zur Herstellung des Additionsproduktes a) verwendeten, endständige Doppelbindungen aufweisende Verbindungen (Meth)acrylatgruppen, bevorzugt Acrylatgruppen, als Doppelbindungen aufweisen und die zur Herstellung des Additionsproduktes b) verwendeten Verbindungen neben mindestens einer endständigen Hydroxygruppe wenigstens eine Acrylat- oder Methacrylatgruppe, vorzugsweise wenigstens eine Acrylatgruppe, als endständige Doppelbindung aufweisen.

3. Eine Verwendung nach Anspruch 1 oder 2, **dadurch gekennzeichnet, dass** sich jedes der Additionsprodukte a)

und b) von wenigstens einer oligomeren, vorzugsweise polymeren, Additionskomponente durch Reaktion mit der Silan-Komponente ableitet.

4. Eine Verwendung nach einem der Ansprüche 1 bis 3, **dadurch gekennzeichnet, dass** sich die mit der Silan-Komponente reagierenden, multifunktionellen Verbindungen zur Herstellung der Additionsprodukte a) bzw. b) von entsprechend funktionelle Endgruppen aufweisenden Polyethern, gesättigten Polyestern, Polyamiden, gesättigten Polyesteramiden und/oder gesättigter Polyesterpolyethern ableiten.

5. Eine Verwendung nach Anspruch 4, **dadurch gekennzeichnet, dass** die zum Einsatz kommenden Polyether-, Polyester- oder Polyesterpolyether-Komponente jeweils
wenigstens zwei ethylenisch ungesättigte Doppelbindungen als Endgruppen oder wenigstens eine endständige, ethylenisch ungesättigte Doppelbindung und wenigstens eine endständige Hydroxy-Gruppe aufweist.

6. Eine Verwendung nach Anspruch 4 oder 5, **dadurch gekennzeichnet, dass** als Polyether wenigstens ein Polyether ausgewählt aus der Gruppe umfassend Polyethylenoxide, Polypropylenoxide, deren Mischungen, deren Copolymere, deren Blockcopolymere und Polyether-Kondensationsprodukte von Bisphenolen mit Epichlorhydrin, als Polyester wenigstens ein Polyester ausgewählt aus der Gruppe umfassend Polyester von Diolen und gesättigten Dicarbonsäuren, Polyester aus Lactonen, vorzugsweise von ε-Caprolacton oder δ-Valerolacton, und Polycarbonate eingesetzt wurden.

7. Eine Verwendung nach einem der Ansprüche 1 bis 6, **dadurch gekennzeichnet, dass** als eine wenigstens eine hydrolysierbare Silangruppe aufweisende Verbindung eine Verbindung der allgemeinen Formel

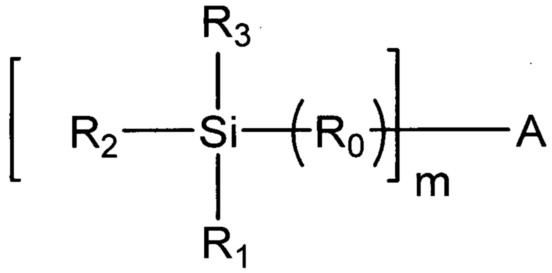

eingesetzt wurde, in der

A für eine Epoxidgruppe, eine Glycidyloxygruppe, eine Isocyanatgruppe, eine -SH Gruppe oder eine -N(H)-X Gruppe steht, wobei X für Wasserstoff, einen ggf. verzweigten Alkylrest mit 1 bis 12 C-Atomen, einen Arylrest mit 6 bis 10 C-Atomen oder eine Cycloalkylrest mit 4 bis 6 C-Atomen steht und jeder dieser X-Reste mit einer oder mehreren primären oder sekundären Aminogruppe substituiert sein kann, oder A eine -NH-Gruppe bedeutet, wenn m eine ganze Zahl 2 ist,
$R_0$ für einen ggf. verzweigten Alkylenrest mit 1 bis 12 C-Atomen, eine Cycloalkylenrest mit 4 bis 6 C-Atomen oder einen Arylenrest mit 6 bis 10 C-Atomen steht,
$R_1$ ,gleich oder verschieden von $R_2$ und $R_3$, für einen ggf. verzweigten Alkylrest mit 1 bis 7 C-Atomen, bevorzugt 1 bis 3 C-Atomen, ein Halogen, eine -O-C(=O)-$R_4$ Gruppe oder eine -O$R_4$ Gruppe steht, wobei $R_4$, gleich oder verschieden für Wasserstoff, eine Methoxyethylgruppe oder einen ggf. verzweigten Alkylrest mit 1 bis 7 C-Atomen, bevorzugt 1 bis 3 C-Atomen, oder einen Cycloalkylrest mit 4 bis 6 C-Atomen steht,
$R_2$ ,gleich oder verschieden von $R_1$ und $R_3$, für einen ggf. verzweigten Alkylrest mit 1 bis 7 C-Atomen, bevorzugt 1 bis 3 C-Atomen, eine -O-C(=O)-$R_4$-Gruppe, ein Halogen oder eine -O$R_4$-Gruppe steht, wobei $R_4$, gleich oder verschieden für Wasserstoff, eine Methoxyethylgruppe oder einen ggf. verzweigten Alkylrest mit 1 bis 7 C-Atomen, bevorzugt 1 bis 3 C-Atomen, oder einen Cycloalkylrest mit 4 bis 6 C-Atomen steht,
$R_3$ ,gleich oder verschieden von $R_1$ und $R_2$, für eine -O-C(=O)-$R_4$-Gruppe, ein Halogen oder eine -O$R_4$-Gruppe steht, wobei $R_4$, gleich oder verschieden für Wasserstoff, eine Methoxyethylgruppe oder einen ggf. verzweigten Alkylrest mit 1 bis 7 C-Atomen, bevorzugt 1 bis 3 C-Atomen, oder einen Cycloalkylrest mit 4 bis 6 C-Atomen steht,

und

m für eine ganze Zahl 1 oder 2 steht.

**8.** Eine Verwendung nach einem der Ansprüche 1 - 7, **dadurch gekennzeichnet, dass** zur Herstellung des Additionsprodukts a) eine Kombination aus einem Aminosilan und mindestens einem Polyamin mit mindestens 2 Aminogruppen eingesetzt wurde, wobei das Polyamin mindestens eine primäre Aminogruppe und mindestens eine sekundäre oder eine weitere primäre Aminogruppe aufweist.

**9.** Eine Verwendung nach einem der Ansprüche 1 - 8, **dadurch gekennzeichnet, dass** der Haftvermittler als Komponente in dem Beschichtungsmaterial eingesetzt oder als zumindest eine Komponente in einem Voranstrich auf der zu beschichtenden Substratoberfläche aufgebracht ist.

**10.** Eine Verwendung nach einem der Ansprüche 1 - 9, **dadurch gekennzeichnet, dass** das Beschichtungsmaterial auf wenigstens einer Komponente basiert, die mit wenigstens einer funktionellen Gruppe des als Haftvermittler vorliegenden Additionsproduktes a) und/oder b) bei der Herstellung der Beschichtung zumindest teilweise umgesetzt wird, wobei das Beschichtungsmaterial vorzugsweise auf wenigstens einem Polyurethan, einem gesättigten Polyester, einem Polyamid, einem Polyolefin, einem Polyvinylchlorid, einem Polystyrol, einem Polycarbonat, einem Poly(meth)acrylat, einem Acrylnitril-Butadien-Styrol-Copolymeren, einem ungesättigten Polyester, einem Epoxidharz, einem Phenol-Formalhdehydharz, einem Melaminharz, einem Phenolharz , einem Siliconharz, einem Polylactid, einem Celluloseether, einem Celluloseester oder einer Mischung aus wenigstens zwei der genannten Polymere basiert.

**11.** Eine Verwendung nach einem der Ansprüche 1 - 9, **dadurch gekennzeichnet, dass** die Beschichtung in Form eines Lackfilms vorliegt, der auf einem ausgehärteten, Bindemittelsystem basiert, dessen funktionelle Gruppen mit denen des Haftvermittlers a) und/oder b) bei der Herstellung des Lackfilms zumindest teilweise umgesetzt werden.

**12.** Eine Verwendung nach Anspruch 1-9 oder 11, **dadurch gekennzeichnet, dass** das auszuhärtende, Bindemittelsystem auf

i. einem härtbaren Bindemittelsystem umfassend wenigstens eine, wenigstens zwei Epoxid-Endgruppen aufweisende Verbindung und wenigstens eine Härterkomponente,
ii. einem härtbaren Bindemittelsystem umfassend Alkoxysilan- oder Silanol-Gruppen aufweisende Verbindungen,
iii. einem härtbaren Bindemittelsystem umfassend wenigstens difunktionelle, Carbonsäuregruppen aufweisende Polymere, vorzugsweise Polyester, und wenigstens eine Verbindung, die mindestens zwei Epoxygruppen oder mindestens zwei OH-Gruppen pro Molekül aufweist,
iv. einem härtbaren Bindemittelsystem umfassend wenigstens ein Polyacrylat- oder Polyester/Melamin basiertes Bindemittel,
v. einem strahlenhärtbaren Bindemittelsystem umfassend ein, wenigstens zwei ethylenisch ungesättigte Gruppen aufweisendes Polymeres, und ggf. mindestens einen mit diesen funktionellen Gruppen copolymerisierbaren Reaktivverdünner,
vi. einem härtbaren Bindemittelsystem umfassend wenigstens ein, wenigstens difunktionelles Polyesteramid und/oder Polyamidimid-basiertes Bindemittel,
vii. einem härtbaren Bindemittelsystem umfassend wenigstens eine, mindestens difunktionelle Isocyanatverbindung, deren Isocyanatgruppen ggf. in geblockter Form vorliegen, und wenigstens eine, mindestens difunktionelle, isocyanatreaktive Komponente,
viii. einem härtbaren Bindemittelsystem umfassend wenigstens ein, wenigstens zwei Epoxid-Endgruppen aufweisendes Polymeres und ein Phenolharz
und/oder
ix. einem härtbaren Bindemittelsystem umfassend wenigstens ein Aminoharz, bevorzugt Melamin- oder Harnstoffharz,

basiert.

**13.** Eine Verwendung nach einem der Ansprüche 1 - 12, **dadurch gekennzeichnet, dass** die Substratoberfläche eine ggf. vorbehandelte und/oder vorgereinigte und/oder passivierte Metalloberfläche und/oder eine Metalllegierungsoberfläche, vorzugsweise aus Aluminium, Eisen, Kupfer, Zink, Zinn, Messing, Bronze, aus einer Aluminiumlegierung oder einer Eisenlegierung, besonders bevorzugt aus Stahl oder Edelstahl, eine Kunststoffoberfläche, vorzugsweise aus einem ggf. gefüllten und/oder faserverstärkten, thermoplastischen, duromeren oder elastomeren Kunststoff oder einer Mischung von wenigstens zwei der genannten Kunststoffe, eine Glasoberfläche, eine Oberfläche eines Cellulosematerials, vorzugsweise von Papier, insbesondere von unbehandelten oder vorbehandelten, besonders

bevorzugt getränkten, gebeizten oder imprägnierten Papier, welches ggf. mit Fasern aus Glas, Kunststoff und/oder Kohlenstoff verstärkt sein kann, eine ggf. vorbehandelte Holzoberfläche oder die Oberfläche eines bereits existierenden, ggf. gebrauchten oder verwitterten Anstriches, vorzugsweise basierend auf ggf. gefüllten und/oder pigmentierten Epoxy-, Alkyd- oder Acrylatharzen, ist.

**14.** Eine Verwendung nach einem der Ansprüche 1 - 13, **dadurch gekennzeichnet, dass** die Substratoberfläche, vorzugsweise als Oberfläche eines Gegenstands oder Artikels, eine flächenförmige Ausdehnung hat.

**15.** Ein Gegenstand oder ein Artikel dessen Metalloberfläche, vorzugsweise aus Aluminium, Eisen, Kupfer, Zink, Zinn oder einer Metalllegierung, vorzugsweise aus einer Aluminium- oder Eisen-Legierung, Messing oder Bronze, oder dessen Kunststoff- oder Glasoberfläche oder dessen Oberfläche aus Cellulosematerial mit einer Beschichtung hergestellt unter Verwendung wenigstens eines Additionsproduktes a) und/oder b) nach einem der Ansprüche 1 - 8 als Haftvermittler versehen ist.

**16.** Ein Gegenstand oder ein Artikel nach Anspruch 15, dessen Beschichtung schichtförmig oder filmförmig ist und auf einem synthetischen, halbsynthetischen und/oder natürlichen Polymeren basiert.

**17.** Ein Gegenstand oder ein Artikel gemäß Anspruch 15 oder 16, **dadurch gekennzeichnet, dass** die Beschichtung auf einem Polymeren gemäß Anspruch 10 basiert.

**18.** Ein Gegenstand oder ein Artikel, dessen Oberfläche mit einer Beschichtung gemäß Anspruch 15 oder 16 in Form eines Lackfilms hergestellt unter Verwendung wenigstens eines Additionsproduktes a) und/oder b) gemäß einem der Ansprüche 1 - 8 in einer Menge von weniger als 5 Gew.-%, bezogen auf das Gesamtgewicht der Beschichtung, und basierend auf einem ausgehärteten Bindemittelsystem gemäß einem der Ansprüche 11 oder 12 versehen ist.

## Claims

**1.** A use of

a.) at least one optionally oligomeric addition product containing no terminal C=C double bonds
of at least one aminosilane and/or thiosilane containing at least one hydrolyzable silane group
and at least one further monoamine and/or polyamine having at least two amino groups, the monoamine and/or polyamine comprising no hydrolyzable silane group and containing at least one primary or secondary amino group,
with at least one compound containing at least two terminal, ethylenically unsaturated double bonds;
and/or of
b.) at least one optionally oligomeric addition product containing no terminal C=C double bonds
of at least one isocyanatosilane and/or epoxy silane containing at least one hydrolyzable silane group
with at least one compound containing at least one terminal hydroxyl group and at least one terminal, ethylenically unsaturated double bond, in combination with at least one monoamine and/or polyamine having at least two amino groups, the monoamine and/or polyamine comprising no hydrolyzable silane group and containing at least one primary or secondary amino group,

as adhesion promoter(s) between a coating based on at least one synthetic, semisynthetic and/or natural polymer and a substrate surface coated therewith, in an amount of less than 5% by weight, based on the total weight of the coating.

**2.** A use according to Claim 1, **characterized in that** the compounds containing terminal double bonds that are used for preparing the addition product a) contain (meth)acrylate groups, preferably acrylate groups, as double bonds, and the compounds used for preparing the addition product b) contain not only at least one terminal hydroxyl group but also at least one acrylate or methacrylate group, preferably at least one acrylate group, as terminal double bond.

**3.** A use according to Claim 1 or 2, **characterized in that** each of the addition products a) and b) derives from at least one oligomeric, preferably polymeric, addition component by reaction with the silane component.

**4.** A use according to any of Claims 1 to 3, **characterized in that** the polyfunctional compounds reacting with the silane component for preparing the addition products a) and/or b) derive from polyethers, saturated polyesters and/or

saturated polyesteramides, polyamides, saturated polyesters, polyethers each containing correspondingly functional end groups.

5. A use according to Claim 4, **characterized in that** the polyether - polyester or polyester polyether - component used contains in each case
at least two ethylenically unsaturated double bonds as end groups
or
at least one terminal, ethylenically unsaturated double bond and at least one terminal hydroxyl group.

6. A use according to Claim 4 or 5, **characterized in that** the polyether used is at least one polyether selected from the group comprising polyethylene oxides, polypropylene oxides, mixtures thereof, copolymers thereof, block copolymers thereof, and polyether condensation products of bisphenols with epichlorohydrin; the polyester used is at least one polyester selected from the group comprising polyesters of diols and saturated dicarboxylic acids, polyesters of lactones, preferably of ε-caprolactone or δ-valerolactone, and polycarbonates.

7. A use according to any of Claims 1 to 6, **characterized in that** as a compound containing at least one hydrolyzable silane group is used a compound of the general formula

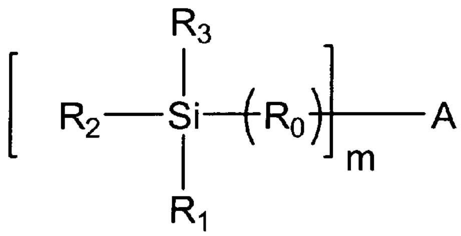

in which

A is an epoxide group, a glycidyloxy group, an isocyanate group, a -SH group or a group -N(H)-X, where X is hydrogen, an optionally branched alkyl radical having 1 to 12 C atoms, an aryl radical having 6 to 10 C atoms or a cycloalkyl radical having 4 to 6 C atoms and each of these X radicals may be substituted by one or more primary or secondary amino group, or A is an - NH group if m is an integer 2,
$R_0$ is an optionally branched alkylene radical having 1 to 12 C atoms, a cycloalkylene radical having 4 to 6 C atoms or an arylene radical having 6 to 10 C atoms,
$R_1$, identical to or different from $R_2$ and $R_3$, is an optionally branched alkyl radical having 1 to 7 C atoms, preferably 1 to 3 C atoms, a halogen, a group -O-C(=O)-$R_4$ or a group -O$R_4$, where $R_4$, identical or different, is hydrogen, a methoxyethyl group or an optionally branched alkyl radical having 1 to 7 C atoms, preferably 1 to 3 C atoms, or a cycloalkyl radical having 4 to 6 C atoms,
$R_2$, identical to or different from $R_1$ and $R_3$, is an optionally branched alkyl radical having 1 to 7 C atoms, preferably 1 to 3 C atoms, a group -O-C(=O)-$R_4$, a halogen or a group -O$R_4$, where $R_4$, identical or different, is hydrogen, a methoxyethyl group or an optionally branched alkyl radical having 1 to 7 C atoms, preferably 1 to 3 C atoms, or a cycloalkyl radical having 4 to 6 C atoms,
$R_3$, identical to or different from $R_1$ and $R_2$, is a group -O-C(=O)-$R_4$, a halogen or a group -O$R_4$, where $R_4$, identical or different, is hydrogen, a methoxyethyl group or an optionally branched alkyl radical having 1 to 7 C atoms, preferably 1 to 3 C atoms, or a cycloalkyl radical having 4 to 6 C atoms,

and

m is an integer 1 or 2.

8. A use according to any of Claims 1 - 7, **characterized in that** the addition product a) was prepared using a combination of an aminosilane and at least one polyamine having at least two amino groups, the polyamine having at least one primary amino group and at least one secondary or a further primary amino group.

9. A use according to any of Claims 1 - 8, **characterized in that** the adhesion promoter is used as a component in the coating material or is applied as at least one component in a preliminary coating on the substrate surface to be coated.

**10.** A use according to any of Claims 1 - 9, **characterized in that** the coating material is based on at least one component which is at least partly reacted with at least one functional group of the addition product a) and/or b) present as adhesion promoter, during the production of the coating, the coating material being based preferably on at least one polyurethane, saturated polyester, polyamide, polyolefin, polyvinyl chloride, polystyrene, polycarbonate, poly(meth)acrylate, acrylonitrile-butadienestyrene copolymer, unsaturated polyester, epoxy resin, phenol-formaldehyde resin, melamine resin, phenolic resin, silicone resin, polylactide, cellulose ether or cellulose ester or on a mixture of at least two of said polymers.

**11.** A use according to any of Claims 1 - 9, **characterized in that** the coating is in the form of a surface-coating film which is based on a cured binder system whose functional groups are at least partly reacted with those of the adhesion promoter a) and/or b) during the production of the surface-coating film.

**12.** A use according to Claim 1 - 9 or 11, **characterized in that** the binder system to be cured is based on

i. a curable binder system comprising at least one compound containing at least two epoxide end groups, and at least one curing component,
ii. a curable binder system comprising compounds containing alkoxysilane groups or silanol groups,
iii. a curable binder system comprising at least difunctional polymers containing carboxylic acid groups, preferably polyesters, and at least one compound which contains at least two epoxy groups or at least two OH groups per molecule,
iv. a curable binder system comprising at least one polyacrylate- or polyester/melamine-based binder,
v. a radiation-curable binder system comprising a polymer containing at least two ethylenically unsaturated groups, and optionally at least one reactive diluent copolymerizable with these functional groups,
vi. a curable binder system comprising at least one at least difunctional polyesteramide and/or polyamideimide-based binder,
vii. a curable binder system comprising at least one at least difunctional isocyanate compound whose isocyanate groups are optionally in blocked form, and at least one at least difunctional isocyanate-reactive component,
viii. a curable binder system comprising at least one polymer containing at least two epoxide end groups, and a phenolic resin
and/or
ix. a curable binder system comprising at least one amino resin, preferably melamine resin or urea resin.

**13.** A use according to any of Claims 1 - 12, **characterized in that** the substrate surface is an optionally pretreated and/or precleaned and/or passivated metal surface and/or a metal alloy surface, preferably of aluminum, iron, copper, zinc, tin, brass, bronze, of an aluminum alloy or iron alloy, more preferably of steel, including stainless steel, a plastics surface, preferably of an optionally filled and/or fiber-reinforced, thermoplastic, thermoset or elastomeric plastic or a mixture of at least two of said plastics, a glass surface, a surface of a cellulose material, preferably of paper, more particularly of untreated or pretreated, more preferably drenched, mordented or impregnated paper, which may optionally have been reinforced with fibers of glass, plastic and/or carbon, an optionally pretreated wood surface or the surface of an existing, optionally spent or weathered coating, preferably based on optionally filled and/or pigmented epoxy resins, alkyd resins or acrylate resins.

**14.** A use according to any of Claims 1 - 13, **characterized in that** the substrate surface, preferably as the surface of an object or article, has a sheetlike extent.

**15.** An object or an article whose metal surface, preferably of aluminum, iron, copper, zinc, tin or a metal alloy, preferably of an aluminum alloy or iron alloy, brass or bronze, or whose plastics surface or glass surface or whose surface of cellulose material has been provided with a coating produced using at least one addition product a) and/or b) according to any of Claims 1 - 8 as adhesion promoter.

**16.** An object or an article according to Claim 15, whose coating is in form of a layer or film and is based on a synthetic, semisynthetic and/or natural polymer.

**17.** An object or an article according to Claim 15 or 16, **characterized in that** the coating is based on a polymer according to Claim 10.

**18.** An object or an article whose surface has been provided with a coating according to Claim 15 or 16 in the form of a surface-coating film produced using at least one addition product a) and/or b) according to any of Claims 1 - 8 in

an amount of less than 5% by weight, based on the total weight of the coating, and is based on a cured binder system according to either of Claims 11 and 12.

## Revendications

**1.** Utilisation de

a) au moins un produit d'addition éventuellement oligomère, ne comprenant pas de doubles liaisons C=C terminales,
d'au moins un aminosilane et/ou thiosilane comprenant au moins un groupe silane hydrolysable,
et d'au moins une autre monoamine et/ou polyamine contenant au moins 2 groupes amino, la monoamine et/ou la polyamine ne contenant pas de groupe silane hydrolysable et comprenant au moins un groupe amino primaire ou secondaire
sur au moins un composé comprenant au moins deux doubles liaisons éthyléniquement insaturées terminales ; et/ou de
b) au moins un produit d'addition éventuellement oligomère ne comprenant pas de doubles liaisons C=C terminales
d'au moins un isocyanatosilane et/ou époxysilane comprenant au moins un groupe silane hydrolysable,
sur au moins un composé comprenant au moins un groupe hydroxy terminal et au moins une double liaison éthyléniquement insaturée terminale, en combinaison avec au moins une monoamine et/ou polyamine contenant au moins 2 groupes amino, la monoamine et/ou la polyamine ne contenant pas de groupe silane hydrolysable et comprenant au moins un groupe amino primaire ou secondaire,
en tant que promoteur d'adhésion entre un revêtement à base d'au moins un polymère synthétique, semi-synthétique et/ou naturel et une surface de substrat revêtue avec celui-ci,
en une quantité de moins de 5 % en poids, par rapport au poids total du revêtement.

**2.** Utilisation selon la revendication 1, **caractérisée en ce que** les composés comprenant des doubles liaisons terminales utilisés pour la fabrication du produit d'addition a) comprennent des groupes (méth)acrylate, de préférence des groupes acrylate, en tant que doubles liaisons, et les composés utilisés pour la fabrication du produit d'addition b) comprennent en plus d'au moins un groupe hydroxy terminal au moins un groupe acrylate ou méthacrylate, de préférence au moins un groupe acrylate, en tant que double liaison terminale.

**3.** Utilisation selon la revendication 1 ou 2, **caractérisée en ce que** les produits d'addition a) et b) dérivent chacun d'au moins un composant d'addition oligomère, de préférence polymère, par réaction avec le composant silane.

**4.** Utilisation selon l'une quelconque des revendications 1 à 3, **caractérisée en ce que** les composés multifonctionnels réagissant avec le composant silane pour la fabrication des produits d'addition a) et b) dérivent de polyéthers, polyesters saturés, polyamides, polyester-amides saturés et/ou polyester-polyéthers saturés comprenant des groupes fonctionnels terminaux correspondants.

**5.** Utilisation selon la revendication 4, **caractérisée en ce que** le composant polyéther, polyester ou polyester-polyéther utilisé comprend à chaque fois au moins deux doubles liaisons éthyléniquement insaturées en tant que groupes terminaux
ou
au moins une double liaison éthyléniquement insaturée terminale et au moins un groupe hydroxy terminal.

**6.** Utilisation selon la revendication 4 ou 5, **caractérisée en ce qu'**au moins un polyéther choisi dans le groupe comprenant les polyoxydes d'éthylène, les polyoxydes de propylène, leurs mélanges, leurs copolymères, leurs copolymères séquencés et les produits de condensation polyéther de bisphénols avec de l'épichlorhydrine est utilisé en tant que polyéther, et au moins un polyester choisi dans le groupe comprenant les polyesters de diols et d'acides dicarboxyliques saturés, les polyesters de lactones, de préférence d'ε-caprolactone ou de δ-valérolactone, et de polycarbonates est utilisé en tant que polyester.

**7.** Utilisation selon l'une quelconque des revendications 1 à 6, **caractérisée en ce qu'**en tant que composé comprenant au moins un groupe silane hydrolysable, un composé de formule générale

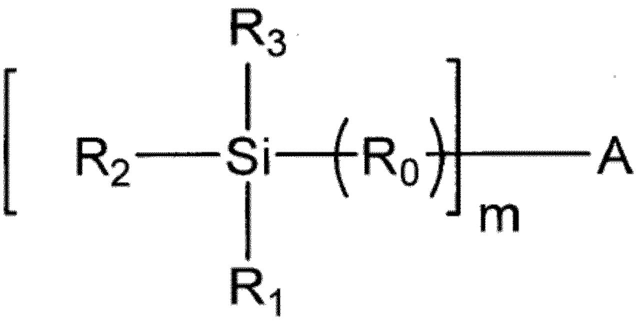

est utilisé, dans laquelle

A représente un groupe époxyde, un groupe glycidyloxy, un groupe isocyanate, un groupe -SH ou un groupe -N(H)-X, X représentant l'hydrogène, un radical alkyle éventuellement ramifié de 1 à 12 atomes C, un radical aryle de 6 à 10 atomes C ou un radical cycloalkyle de 4 à 6 atomes C, et chacun de ces radicaux X pouvant être substitué avec un ou plusieurs groupes amino primaires ou secondaires, ou A signifie un groupe -NH lorsque m est un nombre entier 2,

$R_0$ représente un radical alkylène éventuellement ramifié de 1 à 12 atomes C, un radical cycloalkylène de 4 à 6 atomes C ou un radical arylène de 6 à 10 atomes C,

$R_1$ est identique ou différent de $R_2$ et $R_3$, représente un radical alkyle éventuellement ramifié de 1 à 7 atomes C, de préférence de 1 à 3 atomes C, un halogène, un groupe -O-C(=O)-$R_4$ ou un groupe -O$R_4$, les $R_4$ étant identiques ou différents, et représentant l'hydrogène, un groupe méthoxyéthyle ou un radical alkyle éventuellement ramifié de 1 à 7 atomes C, de préférence de 1 à 3 atomes C, ou un radical cycloalkyle de 4 à 6 atomes C,

$R_2$ est identique ou différent de $R_1$ et $R_3$, représente un radical alkyle éventuellement ramifié de 1 à 7 atomes C, de préférence de 1 à 3 atomes C, un groupe -O-C(=O)-$R_4$, un halogène ou un groupe -O$R_4$, les $R_4$ étant identiques ou différents, et représentant l'hydrogène, un groupe méthoxyéthyle ou un radical alkyle éventuellement ramifié de 1 à 7 atomes C, de préférence de 1 à 3 atomes C, ou un radical cycloalkyle de 4 à 6 atomes C,

$R_3$ est identique ou différent de $R_1$ et $R_2$, représente un groupe -O-C(=O)-$R_4$, un halogène ou un groupe -O$R_4$, les $R_4$ étant identiques ou différents, et représentant l'hydrogène, un groupe méthoxyéthyle ou un radical alkyle éventuellement ramifié de 1 à 7 atomes C, de préférence de 1 à 3 atomes C, ou un radical cycloalkyle de 4 à 6 atomes C,

et

m représente un nombre entier 1 ou 2.

**8.** Utilisation selon l'une quelconque des revendications 1 à 7, **caractérisée en ce que**, pour la fabrication du produit d'addition a), une combinaison d'un aminosilane et d'au moins une polyamine contenant au moins 2 groupes amino est utilisée, la polyamine comprenant au moins un groupe amino primaire et au moins un groupe amino secondaire ou un autre groupe amino primaire.

**9.** Utilisation selon l'une quelconque des revendications 1 à 8, **caractérisée en ce que** le promoteur d'adhésion est utilisé en tant que composant dans le matériau de revêtement ou est appliqué en tant qu'au moins un composant dans un apprêt sur la surface de substrat à revêtir.

**10.** Utilisation selon l'une quelconque des revendications 1 à 9, **caractérisée en ce que** le matériau de revêtement est à base d'au moins un composant qui réagit au moins en partie avec au moins un groupe fonctionnel du produit d'addition a) et/ou b) présent en tant que promoteur d'adhésion lors de la fabrication du revêtement, le matériau de revêtement étant de préférence à base d'au moins un polyuréthane, un polyester saturé, un polyamide, une polyoléfine, un polychlorure de vinyle, un polystyrène, un polycarbonate, un poly(méth)acrylate, un copolymère d'acrylonitrile-butadiène-styrène, un polyester insaturé, une résine époxyde, une résine de phénol-formaldéhyde, une résine de mélamine, une résine de phénol, une résine de silicone, un polylactide, un éther de cellulose, un ester de cellulose ou un mélange d'au moins deux des polymères cités.

**11.** Utilisation selon l'une quelconque des revendications 1 à 9, **caractérisée en ce que** le revêtement se présente sous la forme d'un film de vernis qui est à base d'un système de liant durci dont les groupes fonctionnels réagissent au moins en partie avec ceux du promoteur d'adhésion a) et/ou b) lors de la fabrication du film de vernis.

**12.** Utilisation selon les revendications 1 à 9 ou 11, **caractérisée en ce que** le système de liant à durcir est à base de

i. un système de liant durcissable comprenant au moins un composé comprenant au moins deux groupes terminaux époxyde et au moins un composant durcisseur,
ii. un système de liant durcissable comprenant des composés comprenant des groupes alcoxysilane ou silanol,
iii. un système de liant durcissable comprenant des polymères au moins bifonctionnels comprenant des groupes acide carboxylique, de préférence des polyesters, et au moins un composé qui comprend au moins deux groupes époxy ou au moins deux groupes OH par molécule,
iv. un système de liant durcissable comprenant au moins un liant à base de polyacrylate ou de polyester/mélamine,
v. un système de liant durcissable par rayonnement comprenant un polymère comprenant au moins deux groupes éthyléniquement insaturés, et éventuellement au moins un diluant réactif copolymérisable avec ces groupes fonctionnels,
vi. un système de liant durcissable comprenant au moins un liant à base d'un polyester-amide et/ou polyamide-imide au moins bifonctionnel,
vii. un système de liant durcissable comprenant au moins un composé d'isocyanate au moins bifonctionnel, dont les groupes isocyanate se présentent éventuellement sous forme bloquée, et au moins composant réactif avec les isocyanates au moins bifonctionnel,
viii. un système de liant durcissable comprenant au moins un polymère comprenant au moins deux groupes terminaux époxyde et une résine de phénol,
et/ou
ix. un système de liant durcissable comprenant au moins une résine amino, de préférence une résine mélamine ou urée.

**13.** Utilisation selon l'une quelconque des revendications 1 à 12, **caractérisée en ce que** la surface de substrat est une surface métallique et/ou une surface d'alliage métallique éventuellement prétraitée et/ou prépurifiée et/ou passivée, de préférence en aluminium, fer, cuivre, zinc, étain, laiton, bronze, en un alliage d'aluminium ou un alliage de fer, de manière particulièrement préférée en acier ou acier inoxydable, une surface en plastique, de préférence en un plastique thermoplastique, duromère ou élastomère éventuellement chargé et/ou renforcé par des fibres, ou un mélange d'au moins deux des plastiques cités, une surface en verre, une surface en un matériau cellulosique, de préférence en papier, notamment en papier non traité ou prétraité, de manière particulièrement préférée imbibé, décapé ou imprégné, qui peut éventuellement être renforcé avec des fibres en verre, plastique et/ou carbone, une surface en bois éventuellement prétraitée ou la surface d'une peinture déjà existante, éventuellement usagée ou érodée, de préférence à base de résines époxy, alkyde ou acrylate éventuellement chargées et/ou pigmentées.

**14.** Utilisation selon l'une quelconque des revendications 1 à 13, **caractérisée en ce que** la surface de substrat présente une étendue plate, de préférence en tant que surface d'un objet ou d'un article.

**15.** Objet ou article, dont la surface métallique, de préférence en aluminium, fer, cuivre, zinc, étain ou en un alliage métallique, de préférence en un alliage d'aluminium ou de fer, en laiton ou bronze, ou dont la surface en plastique ou en verre, ou dont la surface en un matériau cellulosique est munie d'un revêtement fabriqué en utilisant au moins un produit d'addition a) et/ou b) selon l'une quelconque des revendications 1 à 8 en tant que promoteur d'adhésion.

**16.** Objet ou article selon la revendication 15, dont le revêtement est en forme de couche ou en forme de film, et à base d'un polymère synthétique, semi-synthétique et/ou naturel.

**17.** Objet ou article selon la revendication 15 ou 16, **caractérisé en ce que** le revêtement est à base d'un polymère selon la revendication 10.

**18.** Objet ou article, dont la surface est munie d'un revêtement selon la revendication 15 ou 16 sous la forme d'un film de vernis fabriqué en utilisant au moins un produit d'addition a) et/ou b) selon l'une quelconque des revendications 1 à 8 en une quantité de moins de 5 % en poids, par rapport au poids total du revêtement, et à base d'un système de liant durci selon l'une quelconque des revendications 11 ou 12.

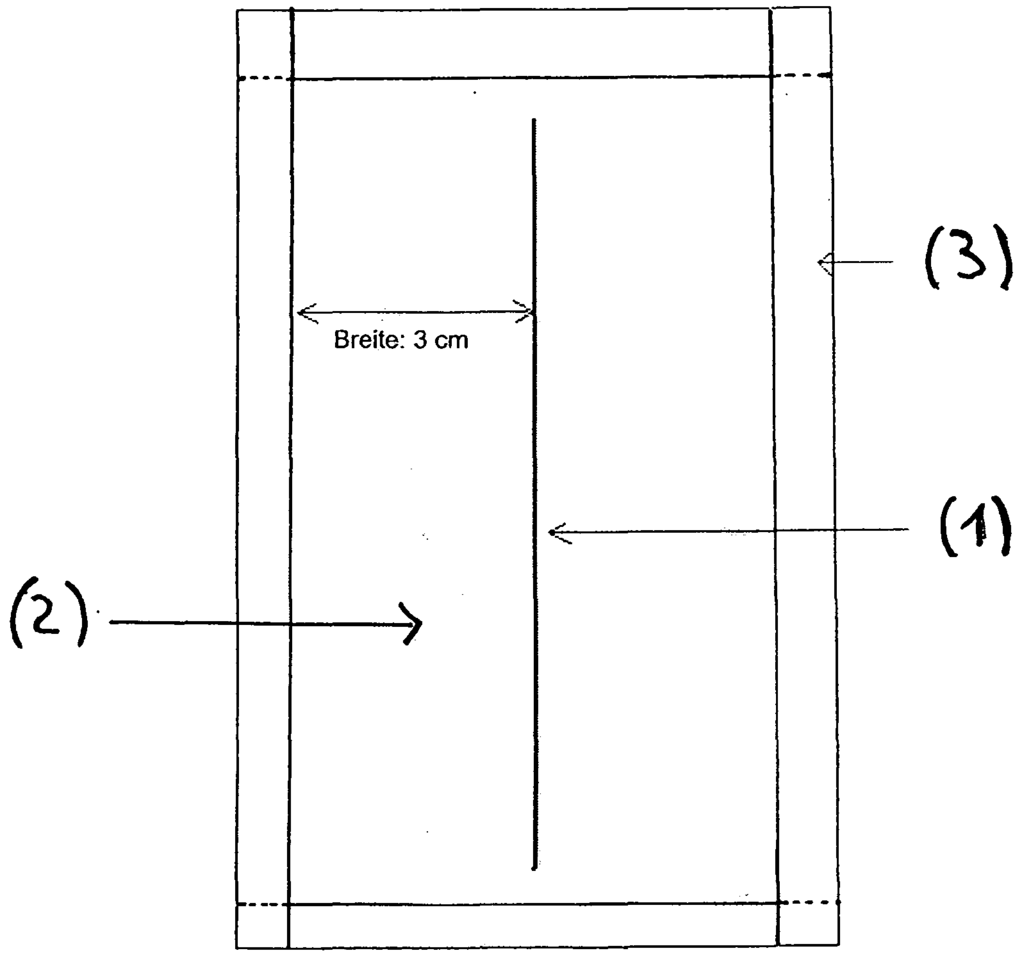


Figur 1/2

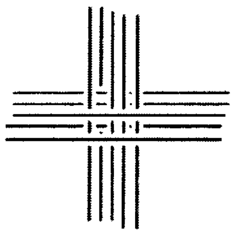

Figur 2/2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1157146 A
- WO 2008003190 A
- US 4889768 A
- WO 2008003191 A
- WO 2009064282 A
- DE 102005046641 A1


### In der Beschreibung aufgeführte Nicht-Patentliteratur


- *Progress in Organic Coatings,* 1995, vol. 26, 275
- *J. Oil Colour Chem. Assoc.,* 1982, vol. 65, 415
- *J. Adhesion Sci. Technol.,* 2006, vol. 20, 1615
- *Prog. Organic Coatings,* 2006, vol. 57, 307
- *Proceedings: 28th Annual Meeting of the Adhesion Society,* 13. Februar 2005, 173 ff
- **T. BROCK ; M. GROTEKLAES ; P. MISCHKE.** Lehrbuch der Lacktechnologie. Vincentz Verlag, 1998
- **D. STOYE ; W. FREITAG.** Lackharze - Chemie, Eigenschaften, Anwendung. Carl Hanser Verlag, 1996
- **T. A. TURNER.** Canmaking - The Technology of Metal Protection and Decoration. Blackie Academic & Professional, 1998
- **H.-G. ELIAS.** Polymere - Von Monomeren und Makromolekülen zu Werkstoffen. Hüthig & Wepf Verlag, 1996
- **B. MEUTHEN ; A.-S. JANDEL.** Coil Coating - Bandbeschichtung: Verfahren, Produkte und Märkte. Friedr. Vieweg & Sohn Verlag, 2005